(19) **Europäisches Patentamt / European Patent Office / Office européen des brevets**

(11) **EP 3 525 028 A2**

(12) # EUROPEAN PATENT APPLICATION

(43) Date of publication:
**14.08.2019 Bulletin 2019/33**

(51) Int Cl.:
**G02B 15/163** [(2006.01)]   **G02B 3/14** [(2006.01)]

(21) Application number: **18197211.8**

(22) Date of filing: **27.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2017   US 201762563965 P**

(71) Applicant: **Cognex Corporation
Natick, MA 01760-3201 (US)**

(72) Inventors:
• **Fernandez-Dorado, Jose
52074 Aachen (DE)**
• **Nunnink, Laurens
Simpelveld (NL)**

(74) Representative: **advotec.
Patent- und Rechtsanwälte
Widenmayerstrasse 4
80538 München (DE)**

(54)   **OPTICAL SYSTEMS HAVING ADAPTABLE VIEWING ANGLE AND WORKING DISTANCE, AND METHODS OF MAKING AND USING THE SAME**

(57)   The present disclosure provides systems and methods for acquiring images of a code at variable distances. The systems and methods utilize variable focus lenses (16, 18) with variabel optical powert together with lens of fixed focus (14) to provide operating conditions where acquisition of images of the code at shorter distances provides a wider viewing angle and lower magnification than acquisition of images of the code at longer distance. In some cases, the distances for code image acquisition can be predefined. The predefined distances can have corresponding predefined variable focus lens settings to facilitate image acquisition.

Fig. 1

EP 3 525 028 A2

**Description**

CROSS-REFERENCE TO RELATED APPLICATIONS

N/A

STATEMENT REGARDING FEDERALLY SPONSORED RESEARCH

N/A

BACKGROUND

Variable focus lenses generally, and liquid lenses in particular, have improved the ability for lens systems to achieve a wide range of optical properties and to switch between settings in a quick fashion. As a result, a nearly infinite set of optical outcomes can be achieved by combining various variable focus lenses in various arrangements of optics and adjusting the settings of those variable focus lenses appropriately. However, determining precisely which settings for the variable focus lenses are necessary to achieve the desired optical outcomes can be a computationally complex process.

One area where variable focus lenses are deployed with increasing regularity is in cell phone cameras. The computational complexity of pairing variable focus lens settings to desired optical outcomes is not particularly problematic in the context of cell phone cameras, or other cameras where merely acquiring an image is the primary outcome, because: a) when merely acquiring an image, the computing power of a cell phone (or other camera) can be more readily monopolized for image acquisition purposes; and b) a cell phone has enough computing power to perform these computations.

In cases where computational resources are more scarce, such as code reading, lens systems are needed that can take advantage of the abilities of variable focus lenses without overwhelming system computational resources with the determination of variable focus lens settings.

BRIEF SUMMARY

In one aspect, the present disclosure provides an optical system for reading a code at a predefined short distance and a predefined long distance. The code has known size dimensions. The optical system include an image sensor, a fixed focus lens, a first variable focus lens, a second variable focus lens, and a variable focus lens controller. The image sensor has an optical axis. The fixed focus lens is positioned along the optical axis at a first distance from the image sensor. The first variable focus lens is positioned along the optical axis at a second distance from the image sensor. The second distance is greater than the first distance. The second variable focus lens is positioned along the optical axis at a third distance from the image sensor. The third distance is greater than the second distance. The variable focus lens controller is programmed to selectively control the first variable focus lens and the second variable focus lens to project a short field of view and a long field of view onto the image sensor. The short field of view has a short focal plane located at the predefined short distance and a short viewing angle. The long field of view has a long focal plane located at the predefined long distance and a long viewing angle. The short viewing angle is wider than the long viewing angle.

In another aspect, the present disclosure provides an optical system for reading a code at a predefined short distance and a predefined long distance. The code has known size dimensions. The optical system include an image sensor, a fixed focus lens, a first variable focus lens, a second variable focus lens, a variable focus lens controller, a processor, and a memory. The image sensor has an optical axis. The fixed focus lens is positioned along the optical axis at a first distance from the image sensor. The first variable focus lens is positioned along the optical axis at a second distance from the image sensor. The second distance is greater than the first distance. The second variable focus lens is positioned along the optical axis at a third distance from the image sensor. The third distance is greater than the second distance. The variable focus lens controller is configured to control a first focal length of the first variable focus lens and a second focal length of the second variable focus lens. The processor is configured to communicate signals to the variable focus lens controller. The memory has stored thereon a predefined short first focal length, a predefined long first focal length, a predefined short second focal length, a predefined long second focal length, and instructions that, when executed by the processor, cause the processor to: receive an input specifying the predefined short distance or the predefined long distance; in response to receiving the input specifying the predefined short distance: retrieve from the memory the predefined short first focal length and the predefined short second focal length; and send one or more short signals to the variable focus lens controller specifying the predefined short first focal length and the predefined short second focal length, thereby causing the variable focus lens controller to set a first focal length of the first variable focus lens to the predefined short first focal length and to set a second focal length of the second variable focus lens to the predefined short second focal length; and in response to receiving the input specifying the long distance: retrieve from the memory the predefined long first focal length and the predefined long second focal length; and send one or more long signals to the variable focus lens controller specifying the predefined long first focal length and the predefined long second focal length thereby causing the variable focus lens controller to set the first focal length of the first variable focus lens to the predefined long first focal length and to set the second focal length of the second variable focus lens to the predefined long second focal length. The predefined short first focal length and the predefined short second focal length are selected to project a short field of view onto the image sensor. The short field of view has a short focal plane located at the predefined short distance and a short viewing angle. The predefined long first focal length and the predefined long second focal length are selected to project a long field of view onto the image sensor. The long field of view has a long focal plane located at the predefined long distance and a long viewing angle. The short viewing angle is wider than the long viewing angle.

In yet another aspect, the present disclosure provides the present disclosure provides an optical system for reading a code at a predefined short distance and a predefined long distance. The code has known size dimensions. The optical system include an image sensor, a fixed focus lens, a first variable focus lens, a second variable focus lens, a variable focus lens controller, a processor, and a memory. The image sensor has an optical axis. The fixed focus lens is positioned along the optical axis at a first distance from the image sensor. The first variable focus lens is positioned along the optical axis at a second distance from the image sensor. The second distance is greater than the first distance. The second variable focus lens is positioned along the optical axis at a third distance from the image sensor. The third distance is greater than the second distance. The variable focus lens controller is configured to control a first focal length of the first variable focus lens and a second focal length of the second variable focus lens. The processor is configured to operate in a short distance mode and a long distance mode. Operating in the short distance mode causes the variable focus lens controller to adjust the first focal length to the predefined short first focal length and to adjust the second focal length to the predefined short second focal length, thereby projecting a short field of view onto the image sensor. The short field of view has a short focal plane located at the predefined short distance and a short viewing angle. Operating in the long distance mode causes the variable focus lens controller to adjust the first focal length to the predefined long first focal length and to adjust the second focal length to the predefined long second focal length, thereby projecting a long field of view onto the image sensor. The long field of view has a long focal plane located at the predefined long distance and a long viewing angle. The short viewing angle is wider than the long viewing angle.

In a further aspect, the present disclosure provide an optical system for reading a code at a predefined short distance, a predefined medium distance, and a predefined long distance. The code has known size dimensions. The optical system include an image sensor, a fixed focus lens, a first variable focus lens, a second variable focus lens, and a variable focus lens controller. The image sensor has an optical axis. The fixed focus lens is positioned along the optical axis at a first distance from the image sensor. The first variable focus lens is positioned along the optical axis at a second distance from the image sensor. The second distance is greater than the first distance. The second variable focus lens is positioned along the optical axis at a third distance from the image sensor. The third distance is greater than the second distance. The variable focus lens controller is programmed to selectively control the first variable focus lens and the second variable focus lens to project a short field of view, a medium field of view, and a long field of view onto the image sensor. The short field of view has a short focal plane located at the predefined short distance and a short viewing angle. The medium field of view has a medium focal plane located at the predefined medium distance and a medium viewing angle. The long field of view has a long focal plane located at the predefined long distance and a long viewing angle. The short viewing angle is wider than the medium viewing angle. The medium viewing angle is wider than the long viewing angle.

In another further aspect, the present disclosure provides an optical system for reading a code at a predefined short distance, a predefined medium distance, and a predefined long distance. The code has known size dimensions. The optical system include an image sensor, a fixed focus lens, a first variable focus lens, a second variable focus lens, a variable focus lens controller, a processor, and a memory. The image sensor has an optical axis. The fixed focus lens is positioned along the optical axis at a first distance from the image sensor. The first variable focus lens is positioned along the optical axis at a second distance from the image sensor. The second distance is greater than the first distance. The second variable focus lens is positioned along the optical axis at a third distance from the image sensor. The third distance is greater than the second distance. The variable focus lens controller is configured to control a first focal length of the first variable focus lens and a second focal length of the second variable focus lens. The processor is configured to communicate signals to the variable focus lens controller. The memory has stored thereon a predefined short first focal length, a predefined medium first focal length, a predefined medium second focal length, a predefined long first focal length, a predefined short second focal length, a predefined long second focal length, and instructions that, when executed by the processor, cause the processor to: receive an input specifying the predefined short distance, the predefined medium distance, or the predefined long distance; in response to receiving the input specifying the predefined short distance: retrieve from the memory the predefined short first focal length and the predefined short second focal length; and send one or more short signals to the variable focus lens controller specifying the predefined short first focal length and the predefined short second focal length, thereby causing the variable focus lens controller to set a first focal length of the first variable focus lens to the predefined short first focal length and to set a second focal length of the second variable focus lens to the predefined short second focal length; in response to receiving the input specifying the predefined medium distance: retrieve from the memory the predefined medium first focal length and the predefined medium second focal length; and send one or more medium signals to the variable focus lens controller specifying the predefined medium first focal length and the predefined medium second focal length, thereby causing the variable focus lens controller to set a first focal length of the first variable focus lens to the predefined medium first focal length and to set a second focal length of the second variable focus lens to the predefined medium second focal length; and in response to receiving the input specifying the long distance: retrieve from the memory the predefined long first focal length and the predefined long second focal length; and send one or more long signals to the variable focus lens controller specifying the predefined long first focal length and the predefined long second focal length thereby causing the variable focus lens controller to set the first focal length of the first variable focus lens to the predefined long first focal length and to set the second focal length of the second variable focus lens to the predefined long second focal length. The predefined short first focal length and the predefined short second focal length are selected to project a short field of view onto the image sensor. The short field of view has a short focal plane located at the predefined short distance and a short viewing angle. The predefined medium first focal length and the predefined medium second focal length are selected to project a medium field of view onto the image sensor. The medium field of view has a medium focal plane located at the predefined medium distance and a medium viewing angle. The predefined long first focal length and the predefined long second focal length are selected to project a long field of view onto the image sensor. The long field of view has a long focal plane located at the predefined long distance and a long viewing angle. The short viewing angle is wider than the medium viewing angle. The medium viewing angle is wider than the long viewing angle.

In yet another aspect, the present disclosure provides an optical system for reading a code at a predefined short distance, a predefined medium distance, and a predefined long distance. The code has known size dimensions. The optical system include an image sensor, a fixed focus lens, a first variable focus lens, a second variable focus lens, a variable focus lens controller, a processor, and a memory. The image sensor has an optical axis. The fixed focus lens is positioned along the optical axis at a first distance from the image sensor. The first variable focus lens is positioned along the optical axis at a second distance from the image sensor. The second distance is greater than the first distance. The second variable focus lens is positioned along the optical axis at a third distance from the image sensor. The third distance is greater than the second distance. The variable focus lens controller is configured to control a first focal length of the first variable focus lens and a second focal length of the second variable focus lens. The processor is configured to operate in a short distance mode, a medium distance mode, and a long distance mode. Operating in the short distance mode causes the variable focus lens controller to adjust the first focal length to the predefined short first focal length and to adjust the second focal length to the predefined short second focal length, thereby projecting a short field of view onto the image sensor. The short field of view has a short focal plane located at the predefined short distance and a short viewing angle. Operating in the medium distance mode causes the variable focus lens controller to adjust the first focal length to the predefined medium first focal length and to adjust the second focal length to the predefined medium second focal length, thereby projecting a medium field of view onto the image sensor. The medium field of view has a medium focal plane located at the predefined medium distance and a medium viewing angle. Operating in the long distance mode causes the variable focus lens controller to adjust the first focal length to the predefined long first focal length and to adjust the second focal length to the predefined long second focal length, thereby projecting a long field of view onto the image sensor. The long field of view has a long focal plane located at the predefined long distance and a long viewing angle. The short viewing angle is wider than the medium viewing angle. The medium viewing angle is wider than the long viewing angle.

In still another aspect, the present disclosure provide a code reading including the optical system as described in any aspect herein.

In another aspect, the present disclosure provide a method of making an optical system for reading a code at a predefined short distance and a predefined long distance. The method includes: a) positioning an image sensor having an optical axis, a fixed focus lens, a first variable focus lens, and a second variable focus lens such that the fixed focus lens is on the optical axis at a first distance from the image sensor, the first variable focus lens is on the optical axis at a second distance from the image sensor, and the second variable focus lens is on the optical axis at a third distance from the image sensor, the second distance is greater than the first distance, the third distance is greater than the second distance, the first variable focus lens and the second variable focus lens in electronic communication with a variable focus lens controller, the variable focus lens controller in electronic communication with a processor, the processor in electronic communication with a memory; b) determining a short first focal length and a short second focal length to provide desired short optical properties for acquiring a first image of the code at the predefined short distance and a long first focal length and a long second focal length to provide desired long optical properties for acquiring a second image of the code at the predefined long distance; and c) storing on the memory a digital representation of the short first focal length, the long first focal length, the short second focal length, and the long second focal length.

In yet another aspect, the present disclosure provides a method of making an optical system for reading a code at a predefined short distance, a predefined medium distance, and a predefined long distance. The method includes: a) positioning an image sensor having an optical axis, a fixed focus lens, a first variable focus lens, and a second variable focus lens such that the fixed focus lens is on the optical axis at a first distance from the image sensor, the first variable focus lens is on the optical axis at a second distance from the image sensor, and the second variable focus lens is on the optical axis at a third distance from the image sensor, the second distance is greater than the first distance, the third distance is greater than the second distance, the first variable focus lens and the second variable focus lens in electronic communication with a variable focus lens controller, the variable focus lens controller in electronic communication with a processor, the processor in electronic communication with a memory; b) determining a short first focal length and a short second focal length to provide desired short optical properties for acquiring a first image of the code at the predefined short distance, a medium first focal length and a medium second focal length to provide desired medium optical properties for acquiring a second image of the code at the predefined medium distance, and a long first focal length and a long second focal length to provide desired long optical properties for acquiring a third image of the code at the predefined long distance; and c) storing on the memory a digital representation of the short first focal length, the medium first focal length, the long first focal length, the short second focal length, the medium second focal length, and the long second focal length.

BRIEF DESCRIPTION OF THE DRAWINGS

Fig. 1 is a cross-sectional view of an optical system, in accordance with aspects of the present disclosure.

Fig. 2 is a cross-sectional view of an optical system, in accordance with aspects of the present disclosure.

Fig. 3 is a handheld code reader, in accordance with aspects of the present disclosure.

Fig. 4 is a flowchart illustrating a method, in accordance with aspects of the present disclosure.

Fig. 5 is a flowchart illustrating a method, in accordance with aspects of the present disclosure.

Fig. 6 is a flowchart illustrating a method, in accordance with aspects of the present disclosure.

Fig. 7 is a plot of system focal length versus object distance for one aspect of the present disclosure compared with a classical zoom system and a fixed focal length system.

DETAILED DESCRIPTION

Before the present invention is described in further detail, it is to be understood that the invention is not limited to the particular embodiments described. It is also to be understood that the terminology used herein is for the purpose of describing particular embodiments only, and is not intended to be limiting. The scope of the present invention will be limited only by the claims. As used herein, the singular forms "a", "an", and "the" include plural embodiments unless the context clearly dictates otherwise.

It should be apparent to those skilled in the art that many additional modifications beside those already described are possible without departing from the inventive concepts. In interpreting this disclosure, all terms should be interpreted in the broadest possible manner consistent with the context. Variations of the term "comprising", "including", or "having" should be interpreted as referring to elements, components, or steps in a non-exclusive manner, so the referenced elements, components, or steps may be combined with other elements, components, or steps that are not expressly referenced. Embodiments referenced as "comprising", "including", or "having" certain elements are also contemplated as "consisting essentially of' and "consisting of' those elements, unless the context clearly dictates otherwise. It should be appreciated that aspects of the disclosure that are described with respect to a system are applicable to the methods, and vice versa, unless the context explicitly dictates otherwise.

Numeric ranges disclosed herein are inclusive of their endpoints. For example, a numeric range of between 1 and 10 includes the values 1 and 10. When a series of numeric ranges are disclosed for a given value, the present disclosure expressly contemplates ranges including all combinations of the upper and lower bounds of those ranges. For example, a numeric range of between 1 and 10 or between 2 and 9 is intended to include the numeric ranges of between 1 and 9 and between 2 and 10.

As used herein, the terms "component," "system," "device" and the like are intended to refer to either hardware, a combination of hardware and software, software, or software in execution. The word "exemplary" is used herein to mean serving as an example, instance, or illustration. Any aspect or design described herein as "exemplary" is not necessarily to be construed as preferred or advantageous over other aspects or designs.

Furthermore, the disclosed subject matter may be implemented as a system, method, apparatus, or article of manufacture using standard programming and/or engineering techniques and/or programming to produce hardware, firmware, software, or any combination thereof to control an electronic based device to implement aspects detailed herein.

Unless specified or limited otherwise, the terms "connected," and "coupled" and variations thereof are used broadly and encompass both direct and indirect mountings, connections, supports, and couplings. Further, "connected" and "coupled" are not restricted to physical or mechanical connections or couplings. As used herein, unless expressly stated otherwise, "connected" means that one element/feature is directly or indirectly connected to another element/feature, and not necessarily electrically or mechanically. Likewise, unless expressly stated otherwise, "coupled" means that one element/feature is directly or indirectly coupled to another element/feature, and not necessarily electrically or mechanically.

As used herein, the term "processor" may include one or more processors and memories and/or one or more programmable hardware elements. As used herein, the term "processor" is intended to include any of types of processors, CPUs, microcontrollers, digital signal processors, or other devices capable of executing software instructions.

As used herein, the term "memory" includes a non-volatile medium, e.g., a magnetic media or hard disk, optical storage, or flash memory; a volatile medium, such as system memory, e.g., random access memory (RAM) such as DRAM, SRAM, EDO RAM, RAMBUS RAM, DR DRAM, etc.; or an installation medium, such as software media, e.g., a CD-ROM, or floppy disks, on which programs may be stored and/or data communications may be buffered. The term "memory" may also include other types of memory or combinations thereof.

A "field of view" as used herein shall refer to a three-dimensional space in which an object, that has no obstructions between the object and the image sensor, is visible at the image sensor.

A "two-dimensional field of view" as used herein shall refer to a projection of the field of view onto the image sensor. The two-dimensional field of view can be limited by two factors: 1) the size of the image sensor - if light is projected around the image sensor, that light is outside the two-dimensional field of view; and 2) any apertures located between the image scene and the image sensor - if no light is projected onto pixels at the periphery of the image sensor, then those pixels are outside the two-dimensional field of view.

A "focal plane" as used herein shall refer to a plane that is perpendicular to an optical axis and which is positioned at the focus of the camera along the optical axis.

A "lens" as used herein shall refer to an optic or multiple optics that perform the function of a lens. Examples of lenses include, but are not limited to, lenses, lens objectives, curved mirror pairs, and the like.

A "variable focus lens" as used herein shall refer to an optic or multiple optics that perform the function of a lens, where the optical power of the variable focus lens can be changed in some fashion. Examples of variable focus lenses include, but are not limited to, liquid lenses and the like.

When distances are discussed herein, the distance refers to a distance long an optical path and not an absolute distance between two objects, unless the context clearly dictates otherwise. As an example, if a first object, a point on a reflective surface, and a second object are positioned such as to form an equilateral triangle having sides of a given length, and the optical path runs from the first object to the point on the reflective surface to the second object, then the distance between the first object and the second object is equal to two times the given length.

The present disclosure relates to optical systems and methods of making and using the same. The optical systems can be deployed in a variety of code reading contexts, including a code reader, such as a hand held code reader.

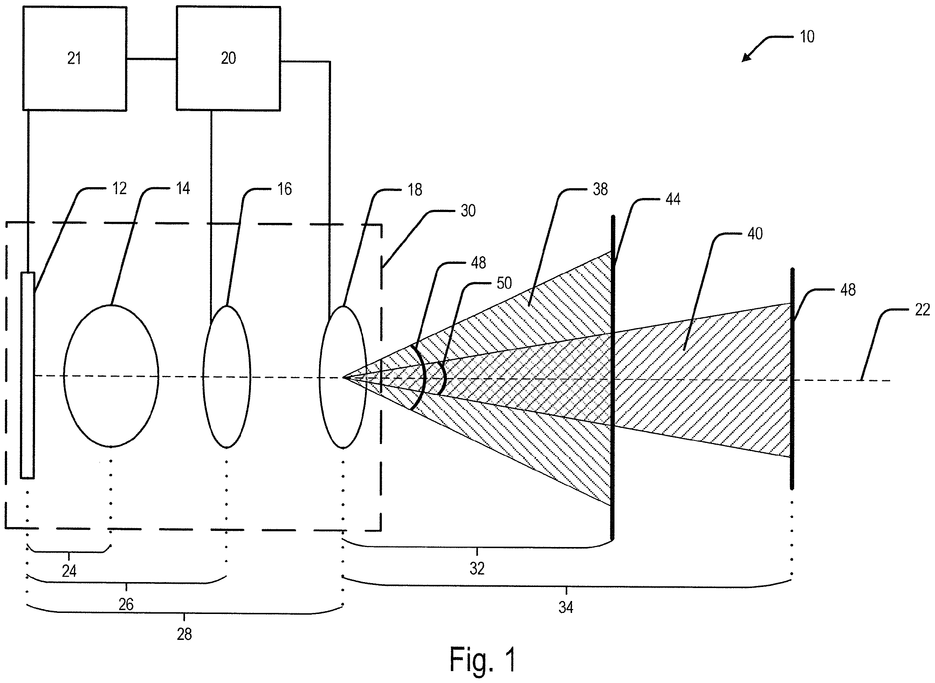

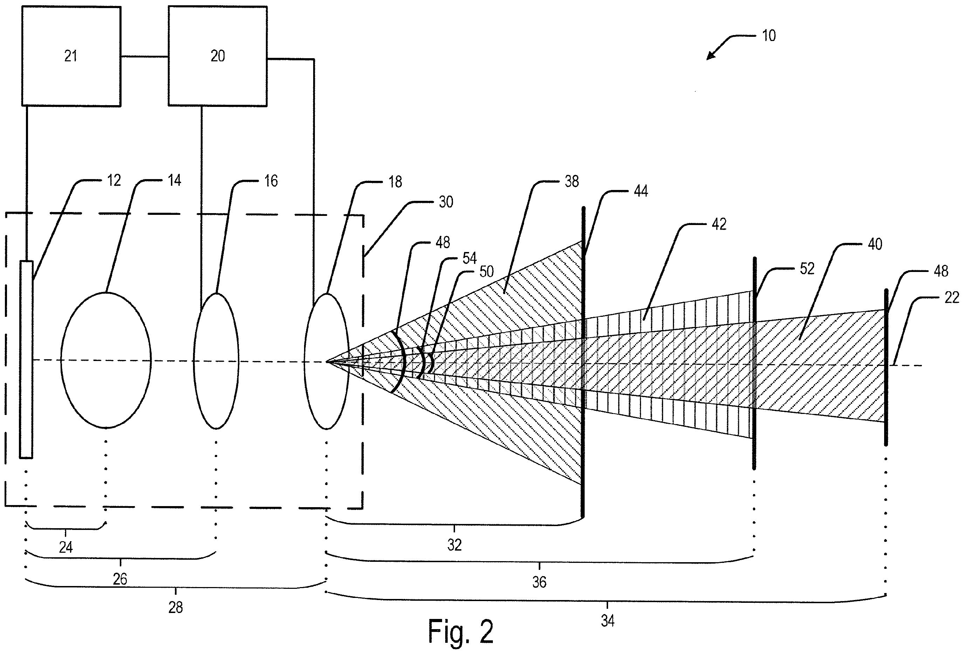

Referring to Figs. 1 and 2, an optical system **10** includes an image sensor **12,** a fixed focus lens **14,** a first variable focus lens **16,** and a second variable focus lens **18.** The optical system **10** can optionally include a housing **30,** in which the various components of the optical system **10** can be mounted. Figs. 1 and 2 represent the optical system **10** in a cross-sectional view.

The code can have known size dimensions. In some cases, the code can have known size dimensions including a largest dimension of between 0.1 cm and 50 cm. In some cases, the code can have known size dimensions including a code width of between 0.1 cm and 25 cm and a code length of between 0.1 cm and 25 cm. In certain cases, a one-dimensional code can have a known length of between 0.1 cm and 50 cm. In certain cases, a two-dimensional code can have a known length of between 0.5 cm and 25 cm and/or a known width of between 0.5 cm and 25 cm. In certain cases, the code can have known size dimensions of ~2.5 cm x ~2.5 cm. In certain cases, the code can have known size dimensions of ~7.5 cm x ~7.5 cm.

The optical system **10** can further include a variable focus lens controller **20** in electronic communication with the first variable focus lens **16** and/or the second variable focus lens **18.** The variable focus lens controller **20** can be a single controller configured to control the first variable focus lens **16** and the second variable focus lens **18.** The variable focus lens controller **20** can be two distinct controllers, each configured to control one of the first variable focus lens **16**

and the second variable focus lens **18**. The variable focus lens controller **20** can be mounted within the housing **30** (not illustrated) or can be remote from the housing **30**. The variable focus lens controller **20** can be a driver circuit configured to receive a small voltage that is representative of a desired variable focus lens focal length and deliver a larger and/or different voltage to a variable focus lens and causes the variable focus lens to be set to the desired variable focus lens focal length.

The optical system **10** can further include a processor **21** in electronic communication with the image sensor **12** and/or the variable focus lens controller **20**. The processor **21** can be configured to acquire an image using the image sensor **12**. The processor **21** can be mounted within the housing **30** (not illustrated) or can be remote from the housing **30**. The processor **21** can be configured to receive an input. In some cases, the input can be a user input. In some cases, the input can be an automatically-generated input. The input can specify a predetermined short distance or a predetermined long distance. In some cases, the input can specify a predetermined short distance, a predetermined medium distance, or a predetermined long distance. The processor **21** can be configured to access a memory (not illustrated) having stored thereon instructions that, when executed by the processor, cause the processor to execute one or more of the steps of any methods described herein, including methods **200, 300.**

The image sensor **12** can be an image sensor known to those having ordinary skill in the art. Examples of suitable image sensors include, but are not limited to, a complementary metal-oxide-semiconductor (CMOS) camera sensor, a charge-coupled device (CCD) sensor, an N-type metal-oxide-semiconductor (NMOS) camera sensor, and the like.

The image sensor **12** can be configured to acquire a monochromatic image. The image sensor **12** can be a monochromatic image sensor. In certain cases, the image sensor **12** can be a color image sensor. In cases with a color image sensor, the image sensor **12** can be operable to acquire an image with only a single wavelength of light (i.e., the image sensor **12** can be a color image sensor that is operable to function as a monochromatic image sensor).

The image sensor **12** can define an optical axis **22**. The optical axis **22** is perpendicular to the image sensor **12**. In some cases, the optical axis **22** emerges from a central point of the image sensor **12**.

The fixed focus lens **14,** the first variable focus lens **16,** and the second variable focus lens **18** can be positioned along the optical axis **22**. The fixed focus lens **14** can be positioned at a first distance **24** from the image sensor **12**. The first variable focus lens **16** can be positioned at a second distance 26 from the image sensor **12**. The second variable focus lens **18** can be positioned at a third distance **28** from the image sensor **12**. The third distance **28** is longer than the second distance **26,** and both the third distance **28** and the second distance **26** are longer than the first distance **24.** These distances can also be defined as the distances between the given optical components, as would be understood by a person having ordinary skill in the art. The fixed focus lens **14** is positioned between the image sensor **12** and the first variable focus lens **16**. The first variable focus lens **16** is positioned between the fixed focus lens **14** and the second variable focus lens **18.**

The first distance **24,** which is the distance between the image sensor **12** and the fixed focus lens **14,** can be between 5 mm and 20 mm.

The second distance **26,** which is the distance between the image sensor **12** and the first variable focus lens **16,** can be between 5 mm and 25 mm.

The third distance **28,** which is the distance between the image sensor **12** and the second variable focus lens **18,** can be between 10 mm and 40 mm.

The fixed focus lens **14** can be made of materials known to those having ordinary skill in the optical arts to be suitable for use as materials for a lens having properties that do not vary over time. Examples of suitable materials for the fixed focus lens **14** include, but are not limited to, glass, quartz, fluorite, fused silica, plastic, and the like.

The first variable focus lens **16** and/or the second variable focus lens **18** can be a liquid lens. Non-limiting examples of a liquid lens include Liquid Lens Technology by Cognex Corporation headquartered in Natick, MA, a focus tunable lens by Optotune Switzerland AG headquartered in Dietikon, Switzerland, or variable focus liquid lenses by Varioptic headquartered in Lyon, France. The liquid lens (or liquid lenses) can be configured have adjustable optical power that corresponds to an applied voltage that is provided to the liquid lens.

The first variable focus lens **14** can have an adjustable first focal length. The first focal length can be adjustable between -20 mm and +20 mm, including but not limited to, between -50 mm and +50 mm, or between -100 mm and +100 mm. The optical power of the first variable focus lens **14,** defined as the inverse of the focal length (1/f), can be adjusted between - 50 to + 50 diopter, including but not limited to -20 to + 20 diopter, or -10 to +10 diopter.

The second variable focus lens **16** can have an adjustable second focal length. The second focal length can be adjustable between -20 mm and +20 mm, including but not limited to, between -50 mm and +50 mm, or between -100 mm and +100 mm. The optical power of the second variable focus lens **16,** defined as the inverse of the focal length (1/f), can be adjusted between -50 to + 50 diopter, including but not limited to -20 to + 20 diopter, or -10 to +10 diopter.

Referring to Fig. 1, the optical system **10** can be configured for acquiring an image of a code at a predefined short distance **32** and a predefined long distance **34**. For the purpose of brevity, this configuration will be referred to as a two-distance configuration.

Referring to Fig. 2, the optical system **10** can be configured for acquiring an image of a code at a predefined short distance **32,** a predefined medium distance **36,** and a predefined long distance **34**. For the purpose of brevity, this configuration will be referred to as a three-distance configuration.

The predefined short distance **32,** the predefined medium distance **36,** and the predefined long distance **34** can be measured from the second variable focus lens **18** or some other fixed point within the optical system **10,** such as a front-facing window of a code reader, so long as the distances remain consistently defined for the purposes of the mathematical calculations discussed herein. A person having ordinary skill in the art will appreciate how to compensate for differences in the definitions of these distances.

In the two- and three-distance configuration, the processor and/or the variable focus lens controller can be configured to selectively control the first variable focus lens and the second variable focus lens to project a short field of view **38** onto the image sensor. In the two- and three-distance configuration, the processor and/or the variable focus lens controller can be configured to set the first focal length of the first variable focus lens and the second focal length of the second variable focus lens, thereby projecting a short field of view onto the image sensor. In the two- and three-distance configuration, the processor and/or the variable focus lens controller can be configured to selectively control the first variable focus lens and the second variable focus lens to project a long field of view onto the image sensor. In the two- and three-distance configuration, the processor and/or the variable focus lens controller can be configured to set the first focal length of the first variable focus lens and the second focal length of the second variable focus lens, thereby projecting a long field of view **40** onto the image sensor. In the two- and three-distance configuration, the processor and/or the variable focus lens controller can be configured to operate in a short distance mode and a long distance mode.

In the three-distance configuration, the processor and/or the variable focus lens controller can be configured to selectively control the first variable focus lens and the second variable focus lens to project a medium field of view **42** onto the image sensor. In the three-distance configuration, the processor and/or the variable focus lens controller can be configured to set the first focal length of the first variable focus lens and the second focal length of the second variable focus lens, thereby projecting a medium field of view onto the image sensor. In the three-distance configuration, the processor and/or the variable focus lens controller can be configured to selectively control the first variable focus lens and the second variable focus lens to project a medium field of view onto the image sensor. In the three-distance configuration, the processor and/or the variable focus lens controller can be configured to operate in a medium distance mode.

It should be appreciated that the optical system **10** will be configured to project one field of view onto the image sensor at a given time. Thus, in aspects described as being configured to project multiple different fields of view onto the image sensor, these aspects should be interpreted as being alternately selectable. For example, an optical system **10** having a variable focus lens controller programmed to selectively control the first variable focus lens and the second variable focus lens to project a short field of view and a long field of view onto the image sensor refers to the variable focus lens controller being able to project the short field of view with one pair of functional settings for the first variable focus lens and the second variable focus lens and able to project the long field of view with a different pair of functional settings for the first variable focus lens and the second variable focus lens.

The short field of view **38** includes a short focal plane **44** and a short viewing angle 46.

The long field of view **40** includes a long focal plane **48** and a long viewing angle **50.**

The medium field of view **42** includes a medium focal plane **52** and a medium viewing angle **54.**

The short field of view **38** can have a wider viewing angle relative to the long field of view **40**. The short field of view **38** can have a shorter depth of field relative to the long field of view **40**. The short field of view **38** can generate a lower resolution relative to the long field of view **40**. The short field of view **38** can have generate a larger aperture relative to the long field of view **40**. The short field of view **38** can generate a projection of the code onto the image sensor **12** that is within 10% relative to the long field of view **40**.

The short field of view **38** can have a wider viewing angle relative to the medium field of view **42**. The short field of view **38** can have a shorter depth of field relative to the medium field of view **42**. The short field of view **38** can generate a lower resolution relative to the medium field of view **42**. The short field of view **38** can have generate a larger aperture relative to the medium field of view **42**. The short field of view **38** can generate a projection of the code onto the image sensor **12** that is within 10% relative to the medium field of view **42.**

The medium field of view **42** can have a wider viewing angle relative to the long field of view **40**. The medium field of view **42** can have a shorter depth of field relative to the long field of view **40**. The medium field of view **42** can generate a lower resolution relative to the long field of view **40**. The medium field of view **42** can have generate a larger aperture relative to the long field of view **40**. The medium field of view **42** can generate a projection of the code onto the image sensor **12** that is within 10% relative to the long field of view **40.**

In the two-distance configuration, the processor **21** and/or the variable focus lens controller **20** can be configured to prevent the first focal length from being adjusted to a value that is outside a range defined by the focal length values between the predefined short first focal length minus 25 mm, 10 mm, 5 mm, or 1 mm and the predefined short first focal length plus 25 mm, 10 mm, 5 mm, or 1 mm and between the predefined long first focal length minus 25 mm, 10 mm, 5 mm, or 1 mm and the predefined long first focal length plus 25 mm, 10 mm, 5 mm, or 1 mm. In the two-distance configuration, the processor **21** and/or the variable focus lens controller **20** can be configured to prevent the second focal length from being adjusted to a value that is outside a range defined by the focal length values between the predefined short second focal length minus 25 mm, 10 mm, 5 mm, or 1 mm and the predefined short second focal length plus 25 mm, 10 mm, 5 mm, or 1 mm and between the predefined long second focal length minus 25 mm, 10 mm, 5 mm, or 1 mm and the predefined long second focal length plus 25 mm, 10 mm, 5 mm, or 1 mm.

In the two-distance configuration, the processor **21** and/or the variable focus lens controller **20** can be configured to prevent the first optical power from being adjusted to a value that is outside a range defined the predefined short first optical power plus or minus 0.1 diopter, 0.2 diopter, 0.5 diopter, or 1.0 diopter and the range defined by the predefined long first optical power plus or minus 0.1 diopter, 0.2 diopter, 0.5 diopter, or 1 diopter. In the two-distance configuration, the processor **21** and/or the variable focus lens controller **20** can be configured to prevent the second optical power from being adjusted to a value that is outside a range defined the predefined short second optical power plus or minus 0.1 diopter, 0.2 diopter, 0.5 diopter, or 1 diopter and the range defined by the predefined long second optical power plus or minus 0.1 diopter, 0.2 diopter, 0.5 diopter, or 1 diopter.

In the three-distance configuration, the processor **21** and/or the variable focus lens controller **20** can be configured to prevent the first optical power from being adjusted to a value that is outside a range defined the predefined short first optical power plus or minus 0.1 diopter, 0.2 diopter, 0.5 diopter, or 1 diopter and the range defined by the predefined medium first optical power plus or minus 0.1 diopter, 0.2 diopter, 0.5 diopter, or 1 diopter and the range defined by the predefined long first optical power plus or minus 0.1 diopter, 0.2 diopter, 0.5 diopter, or 1 diopter. In the three-distance configuration, the processor **21** and/or the variable focus lens controller **20** can be configured to prevent the second optical power from being adjusted to a value that is outside a range defined the predefined short second optical power plus or minus 0.1 diopter, 0.2 diopter, 0.5 diopter, or 1 diopter and the range defined by the predefined medium second optical power plus or minus 0.1 diopter, 0.2 diopter, 0.5 diopter, or 1 diopter and the range defined by the predefined long second optical power plus or minus 0.1 diopter, 0.2 diopter, 0.5 diopter, or 1 diopter.

In the three-distance configuration, the processor **21** and/or the variable focus lens controller **20** can be configured to prevent the first focal length from being adjusted to a value that is outside a range defined by the focal length values between the predefined short first focal length minus 25 mm, 10 mm, 5 mm, or 1 mm and the predefined short first focal length plus 25 mm, 10 mm, 5 mm, or 1 mm, between the predefined medium first focal length minus 25 mm, 10 mm, 5 mm, or 1 mm and the predefined medium first focal length plus 25 mm, 10 mm, 5 mm, or 1 mm, and between the predefined long first focal length minus 25 mm, 10 mm, 5 mm, or 1 mm and the predefined long first focal length plus 25 mm, 10 mm, 5 mm, or 1 mm. In the three-distance configuration, the processor **21** and/or the variable focus lens controller **20** can be configured to prevent the second focal length from being adjusted to a value that is outside a range defined by the focal length values between the predefined short second focal length minus 25 mm, 10 mm, 5 mm, or 1 mm and the predefined short second focal length plus 25 mm, 10 mm, 5 mm, or 1 mm, between the predefined medium second focal length minus 25 mm, 10 mm, 5 mm, or 1 mm and the predefined medium second focal length plus 25 mm, 10 mm, 5 mm, or 1 mm, and between the predefined long second focal length minus 25 mm, 10 mm, 5 mm, or 1 mm and the predefined long second focal length plus 25 mm, 10 mm, 5 mm, or 1 mm.

The processor **21** can be configured to fine tune the first focal length and/or the second focal length. This fine tuning can involve acquiring an image using the processor **21** and the image sensor **12.** The processor **21** can be configured to fine tune the first focal length and the second focal length within the focal length ranges or optical power ranges described in the four immediately preceding paragraphs. The processor **21** can be configured to fine tune the first focal length and the second focal length by an amount of less than 25 mm, less than 10 mm, less than 5 mm, or less than 1 mm. The image can then be analyzed for one or more desired performance characteristics, including but not limited to, sharpness, brightness, illumination, distance measurements, combinations thereof, and the like.

While the optical system **10** is illustrated in a linear fashion, it should be appreciated that the optical system **10** can include various reflective configurations without departing from the spirit of the disclosure. The optical system **10** can include additional optics that are suitable for use with the present disclosure, including but not limited to, additional lenses that do not impact the described function of the optical system **10,** filters, apertures, shutters, polarizers, mirrors, waveplates, prisms, combinations thereof, and the like.

Optics in the optical system **10,** including the fixed focus lens **14,** the first variable focus lens **16,** and the second variable focus lens **18** can include various coatings, such as antireflection coatings, filter coatings (i.e., a coating that optically filters out certain wavelengths, such as ultraviolet light), anti-lens flare coatings, infrared, short band pass filter, BBAR, combinations thereof, and the like.

It should be appreciated that other types of variable focus lenses are contemplated without departing from the scope of the present disclosure, including liquid lenses that have optical power adjusted by way of changes in fluid pressure provided by a high speed pump, and the like.

In certain aspects, the variable focus lens controller **20** can be a driver circuit that is configured to provide a known voltage to the first variable focus lens **16** and/or the second variable focus lens **18** can be a liquid lens. In certain cases, the variable focus lens controller **20** can have firmware that restricts control of the first variable focus lens **16** and the second variable focus lens **18** to the specific settings described herein (i.e., settings for a predefined short distance, a predefined long distance, and optionally a predefined medium distance) and prevents the variable focus lens controller **20** from accessing other settings and subsequent different optical outcomes.

In certain cases, the optical system 10 can include a processor 21 that is separate and distinct from the variable focus lens controller 20. In these separate and distinct cases, the processor 21 can be located proximate the variable focus lens controller 20 or remote from the variable focus lens controller 20. In certain cases, the optical system 10 can include a processor 21 that is integrated with the variable focus lens controller 20.

In certain cases, the optical system **10** described herein can be specialized in its programming to be particularly useful at capturing images of a code of a given size at two distances, a short distance and a long distance. When designing the optical system 10 for the given code size and the two given distances, pairs of optical powers for the first variable focus lens **16** and the second variable focus lens **18** are calculated, which each correspond to different viewing angles and working distances (i.e., the short distance and the long distance). The following equations can be used for these calculations:

$$f_2' = \frac{a_2' \left( \dfrac{f_1' a_1}{f_1' + a_1} - e \right)}{\dfrac{f_1' a_1}{f_1' + a_1} - e - a_2'} \quad \text{; and} \tag{1}$$

$$f_2' = \frac{f_T' \left( f_1' - e \right)}{f_1' - f_T'}, \tag{2}$$

where $f'_1$ is the focal length of the first variable focus lens **16,** $f'_2$ is the focal length of the second variable focus lens **18,** $f'_T$ is the focal length of the entire optical system **10,** e is the distance between the first variable focus lens **16** and the second variable focus lens **18** (i.e., the third distance minus the second distance), $a_1$ is the distance from the second variable focus lens **18** to the object (i.e., the code), and $a'_2$ is the back focal length (i.e., the distance from the image sensor 12 to the fixed focus lens **14**).

Equations (1) and (2) can be solved for both the short and long distances (i.e., the two anticipated distances between the second variable focus lens **18** and the code for a given code reading application). This solving of the equations can take into account any constraints on optical power for the variable focus lenses **16, 18.** A discrete pair (or set) of working distances can be calculated with magnification and field of view being optimized for a given usage.

In certain cases, the optical power of both variable focus lenses **16, 18** can be adjusted to achieve a certain magnification at a certain object distance. In certain aspects, the lens can be designed to provide a small field of view at the large distance (or a small viewing angle) and/or a large field of view at the short distance (or a wide viewing angle).

As one exemplary calculation, assuming a system that has a distance between the two variable focus lenses **16, 18** of 20 mm, a back focal length of 20 mm, a short object distance of 100 mm, and a long object distance of 10,000 mm, the focal length settings shown in Table 1 are computed. The settings in Table 1 provide a large viewing angle at the short object distance and a higher resolution at the long object distance.

**Table 1**

| Short distances | | Long distances | |
|---|---|---|---|
| Object distance (a1) | 100 mm | Object distance (a1) | 10,000 mm |
| Focal value of the whole system ($f'_T$) | 16mm | Focal value of the whole system ($f'_T$) | 24 mm |
| focal length of the first variable focus lens | -220 mm | focal length of the first variable focus lens | 120 mm |
| focal length of the second variable focus lens | 70mm | focal length of the second variable focus lens | -100 mm |

It should be appreciated that the exemplary calculations described above are not the only way to compute the pairs of optical powers and the calculations are not intended to be limiting.

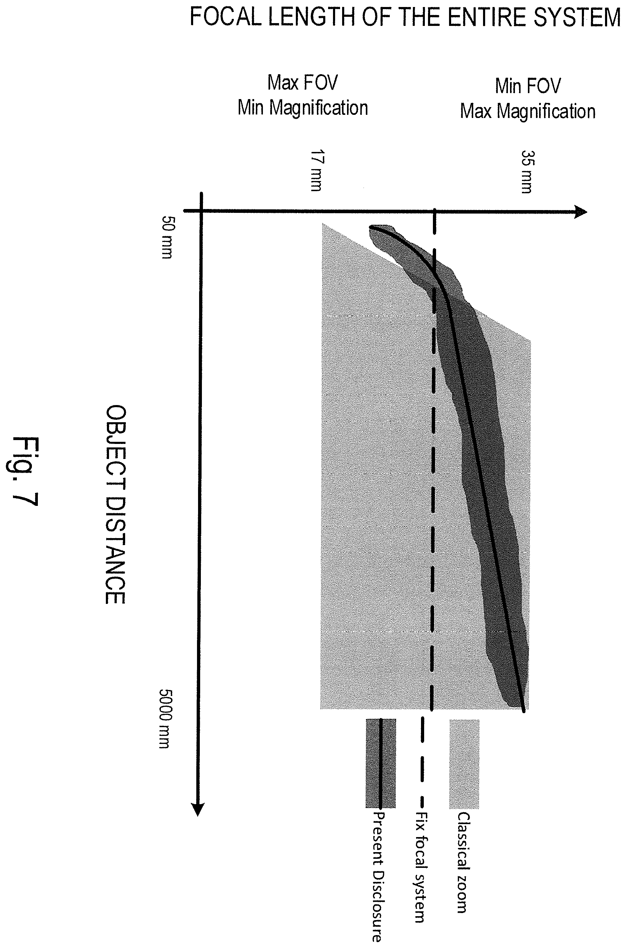

In certain cases, the system **10** can be configured to provide focal lengths and fields of view at a continuous plurality of distances. Referring to Fig. 7, the plot denoted as "Our invention" represents one aspect of the present disclosure. As this plot illustrates, the focal length of the system **10** increases in a non-linear fashion as the object distance (i.e., the focal plane) increases. By way of comparison, a classical zoom lens system is denoted as "Classical zoom" in Fig. 7. These classical zoom lenses can utilize a much broader range of focal length values at a given distance, but cannot achieve the focal lengths, fields of view, or magnification levels of this aspect of the present disclosure at shorter object distances. By way of another comparison, a fixed focus system is denoted as "Fix focal system" in Fig. 7. These fixed focus systems utilize a single focal length value for the system, regardless of the object distance, and cannot achieve the focal lengths, fields of view, or magnification levels of this aspect of the present disclosure at most distances. It should be appreciated that in this aspect, the system is not linear and some variations in the focal length can be achieved at given different object distances in order to acquire a sharper focus, hence the illustration of a surface rather than a simple line. In addition, it should be appreciated that a system can utilize just two, three, four, or more discrete points from the plot in Fig. 7.

In certain cases, the processor **21** and/or the variable focus lens controller **20** can be configured to prevent the variable focus lenses **16, 18** from having their focal length set to any values other than the predefined short focal length and predefined long focal length values (and optionally, the predefined medium focal length values).

The processor **21** can have stored thereon instructions that, when executed by the processor, cause the processor to execute any of the methods of using the optical system that are described herein.

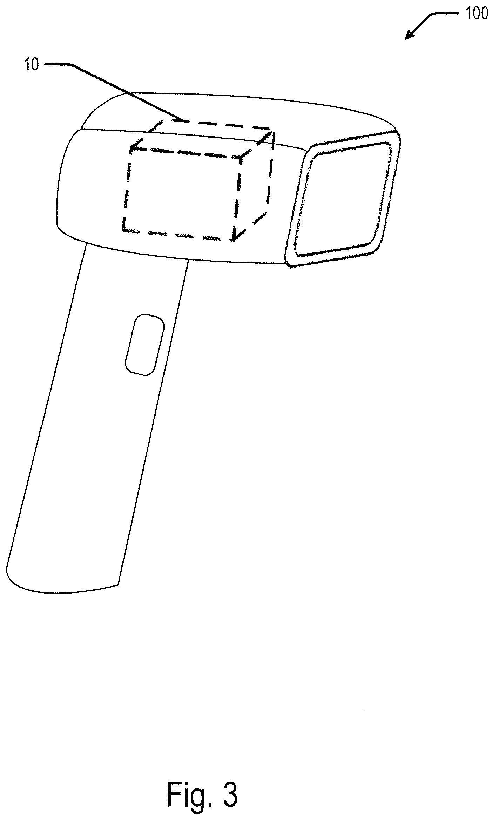

Referring to Fig. 3, this disclosure provides a code reader **100** that includes the optical system 10 as described in any aspect herein. The code reader **100** can be a hand held code reader. The hand held code reader can include the optical system **10** described herein.

The optical system **10** and code reader **100** described herein can include features described in the methods **200, 300, 400** described below, unless the context clearly dictates otherwise.

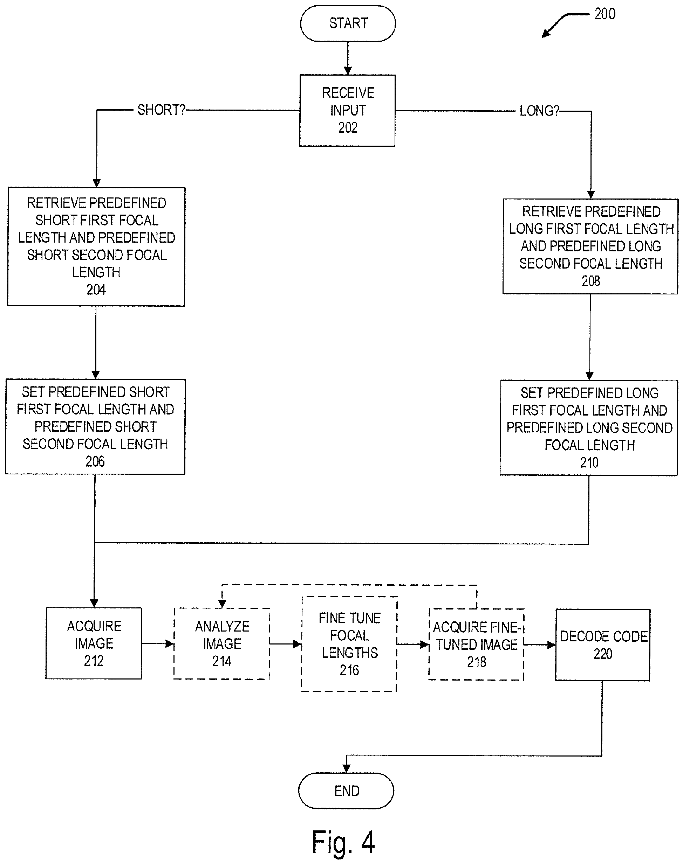

Referring to Fig. 4, this disclosure provides a method **200** of using an optical system 10 for reading a code at a predefined short distance or a predefined long distance. At process block **202,** the method **200** includes receiving an input specifying the predefined short distance or the predefined long distance. If the input specifies the predefined short distance, the method **200** proceeds to process block **204.** If the input specifies the predefined long distance, the method **200** proceeds to process block **208.** At process block **204,** in response to receiving the input specifying the predefined short distance, the method **200** includes retrieving from the memory a predefined short first focal length and a predefined short second focal length. At process block **206,** the method **200** includes setting a first focal length of the first variable focus lens to the predefined short first focal length and setting a second focal length of the second variable focus lens to the predefined short second focal length. At process block **208,** in response to receiving the input specifying the predefined long distance, the method **200** includes retrieving from the memory a predefined long first focal length and a predefined long second focal length. At process block **210,** the method **200** includes setting the first focal length of the first variable focus lens to the predefined long first focal length and setting the second focal length of the second variable focus lens to the predefined long second focal length.

At process block **212,** the method **200** includes acquiring an image with the optical system. At optional process block **214,** the method **200** can include analyzing the image to determine if the image is of sufficient quality for decoding the code. At optional process block **216,** the method **200** can include fine tuning the first focal length and/or the second focal length based on the analysis of process block **214.** The fine tuning of process block **216** includes the fine tuning described elsewhere herein. At optional process block **218,** the method can include acquiring a fine-tuned image. Process blocks **214, 216,** and **218** can be repeated as necessary to provide an image of sufficient quality for decoding the code. At process block **220,** the method 200 can include decoding the code in either the image or the fine-tuned image.

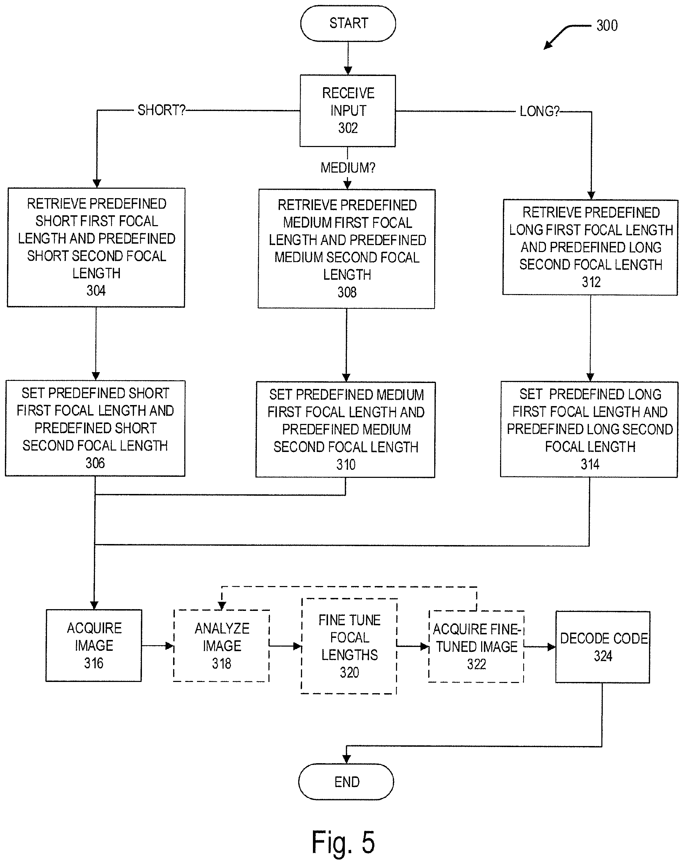

Referring to Fig. 5, this disclosure provides a method **300** of using an optical system 10 for reading a code at a predefined short distance, a predefined medium distance, or a predefined long distance. At process block **302,** the method **300** includes receiving an input specifying the predefined short distance, the predefined medium distance, or the predefined long distance. At process block **302,** the method **300** includes receiving an input specifying the predefined short distance, the predefined medium distance, or the predefined long distance. If the input specifies the predefined short distance, the method **300** proceeds to process block **304.** If the input specifies the predefined medium distance, the method **300** proceeds to process block 308. If the input specifies the predefined long distance, the method **300** proceeds to process block **312.** At process block **304,** in response to receiving the input specifying the predefined short distance, the method **300** includes retrieving from the memory a predefined short first focal length and a predefined short second focal length. At process block **306,** the method **300** includes setting a first focal length of the first variable focus lens to the predefined short first focal length and setting a second focal length of the second variable focus lens to the predefined short second focal length. At process block **308,** in response to receiving the input specifying the predefined medium distance, the method **300** includes retrieving from the memory a predefined medium first focal length and a predefined medium second focal length. At process block **310,** the method **300** includes setting the first focal length of the first variable focus lens to the predefined medium first focal length and setting the second focal length of the second variable focus lens to the predefined medium second focal length. At process block **312,** in response to receiving the input specifying the predefined long distance, the method **300** includes retrieving from the memory a predefined long first focal length and a predefined long second focal length. At process block **314,** the method **300** includes setting the first focal length of the first variable focus lens to the predefined long first focal length and setting the second focal length of the second variable focus lens to the predefined long second focal length.

At process block **316,** the method **300** includes acquiring an image with the optical system. At optional process block **318,** the method **300** can include analyzing the image to determine if the image is of sufficient quality for decoding the code. At optional process block **320,** the method **300** can include fine tuning the first focal length and/or the second focal length based on the analysis of process block **318.** The fine tuning of process block **320** includes the fine tuning described elsewhere herein. At optional process block **322,** the method can include acquiring a fine-tuned image. Process blocks **318, 320,** and **322** can be repeated as necessary to provide an image of sufficient quality for decoding the code. At process block **324,** the method **300** can include decoding the code in either the image or the fine-tuned image.

The receiving the input of process blocks **202** and **302** can be achieved in a variety of ways. In some cases, receiving the input can include a user providing a manual input defining the desired predefined distance and the manual input can be electronically communicated to the processor. In some cases, the input can be automatically provided as a result of monitoring a property of the optical system, or optionally a code reader or handheld code reader. In some cases, the property of the optical system can include the orientation of the optical system. In some cases, a distance to the code can be measured, for example by using a laser range-finder or other known distance measuring technique, and the input can be deduced from the distance to the code.

The setting of the focal lengths of process blocks **206, 210, 306, 310,** and **314** can be achieved in a variety of ways. In some cases, the processor can communicate directly with the first variable focus lens and the second variable focus lens to set the respective focal lengths. In some cases, the processor can send one or more signals (in the case of a predefined short distance, the one or more signals can be one or more short signals, in the case of a predefined medium distance, the one or more signals can be one or more medium signals, and in the case of a predefined long distance, the one or more signals can be one or more long signals) to the variable focus lens controller, which subsequently communicates with the first variable focus lens and the second variable focus lens to set the respective focal lengths. In some cases, the setting of the focal lengths can be achieved by methods known to those having ordinary skill in the electronic communications arts.

In methods **200, 300,** the predefined short first focal length and the predefined short second focal length are selected to define the short field of view to have the properties described above. In methods **200, 300,** the predefined long first focal length and the predefined long second focal length are selected to define the long field of view to have the properties described above. In method **300,** the predefined medium first focal length and the predefined medium second focal length are selected to define the medium field of view to have the properties described above.

The methods **200, 300** can include features described elsewhere herein with respect to the optical system **10,** the code reader **100,** or the method **400,** unless the context clearly dictates otherwise.

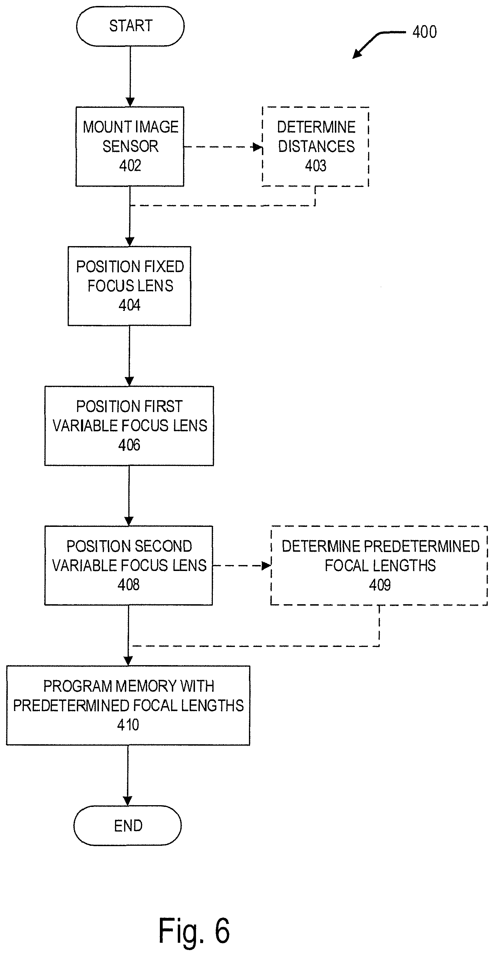

Referring to Fig. 6, this disclosure provides a method **400** of making an optical system **10.** At process block **402,** the method **400** can include mounting an image sensor having an optical axis. At process block **404,** the method **400** can include positioning a fixed focus lens along the optical axis at a first distance from the image sensor. At process block **406,** the method **400** can include positioning a first variable focus lens along the optical axis at a second distance from the image sensor. The second distance is greater than the first distance. At process block **408,** the method **400** can include positioning a second variable focus lens along the optical axis at a third distance from the image sensor. The third distance is greater than the second distance. At process block **410,** the method can include programming a memory to have stored thereon predetermined focal lengths, such as those described above (i.e., a predetermined short first focal length, predetermined long second focal length, etc.).

At optional process block **409,** the method **400** can also optionally include determining the predetermined focal lengths. The determining of optional process block **409** can be achieved as described above.

The method **400** can include features described elsewhere herein with respect to the optical system **10,** the code reader **100,** or the methods **200, 300,** unless the context clearly dictates otherwise.

The present specification also includes the following statements:

1. An optical system for reading a code at a predefined short distance and a predefined long distance, the code having known size dimensions, the optical system comprising:

an image sensor having an optical axis;
a fixed focus lens positioned along the optical axis at a first distance from the image sensor;
a first variable focus lens positioned along the optical axis at a second distance from the image sensor, the second distance is greater than the first distance;

a second variable focus lens positioned along the optical axis at a third distance from the image sensor, the third distance is greater than the second distance; and

a variable focus lens controller programmed to selectively control the first variable focus lens and the second variable focus lens to project a short field of view and a long field of view onto the image sensor, the short field of view having a short focal plane located at the predefined short distance and a short viewing angle, the long field of view having a long focal plane located at the predefined long distance and a long viewing angle, wherein the short viewing angle is wider than the long viewing angle.

2. An optical system for reading a code at a predefined short distance and a predefined long distance, the code having known size dimensions, the optical system comprising:

an image sensor having an optical axis;

a fixed focus lens positioned along the optical axis at a first distance from the image sensor;

a first variable focus lens positioned along the optical axis at a second distance from the image sensor, the second distance is greater than the first distance;

a second variable focus lens positioned along the optical axis at a third distance from the image sensor, the third distance is greater than the second distance;

a variable focus lens controller configured to control a first focal length of the first variable focus lens and a second focal length of the second variable focus lens;

a processor configured to communicate signals to the variable focus lens controller; and

a memory having stored thereon a predefined short first focal length, a predefined long first focal length, a predefined short second focal length, a predefined long second focal length, and instructions that, when executed by the processor, cause the processor to:

receive an input specifying the predefined short distance or the predefined long distance;

in response to receiving the input specifying the predefined short distance:

retrieve from the memory the predefined short first focal length and the predefined short second focal length; and

send one or more short signals to the variable focus lens controller specifying the predefined short first focal length and the predefined short second focal length, thereby causing the variable focus lens controller to set a first focal length of the first variable focus lens to the predefined short first focal length and to set a second focal length of the second variable focus lens to the predefined short second focal length; and

in response to receiving the input specifying the long distance:

retrieve from the memory the predefined long first focal length and the predefined long second focal length; and

send one or more long signals to the variable focus lens controller specifying the predefined long first focal length and the predefined long second focal length thereby causing the variable focus lens controller to set the first focal length of the first variable focus lens to the predefined long first focal length and to set the second focal length of the second variable focus lens to the predefined long second focal length,

wherein the predefined short first focal length and the predefined short second focal length are selected to project a short field of view onto the image sensor, the short field of view having a short focal plane located at the predefined short distance and a short viewing angle,

wherein the predefined long first focal length and the predefined long second focal length are selected to project a long field of view onto the image sensor, the long field of view having a long focal plane located at the predefined long distance and a long viewing angle, and

wherein the short viewing angle is wider than the long viewing angle.

3. An optical system for reading a code at a predefined short distance and a predefined long distance, the code having known size dimensions, the optical system comprising:

an image sensor having an optical axis;

a fixed focus lens positioned along the optical axis at a first distance from the image sensor;

a first variable focus lens positioned along the optical axis at a second distance from the image sensor, the second distance is greater than the first distance;

a second variable focus lens positioned along the optical axis at a third distance from the image sensor, the third distance is greater than the second distance;

a memory having stored thereon a predefined short first focal length, a predefined long first focal length, a predefined short second focal length, and a predefined long second focal length;

a variable focus lens controller configured to control a first focal length of the first variable focus lens and a second focal length of the second variable focus lens; and

a processor configured to operate in a short distance mode and a long distance mode,

wherein operating in the short distance mode causes the variable focus lens controller to adjust the first focal length to the predefined short first focal length and to adjust the second focal length to the predefined short second focal length, thereby projecting a short field of view onto the image sensor, the short field of view having a short focal plane located at the predefined short distance and a short viewing angle, and

wherein operating in the long distance mode causes the variable focus lens controller to adjust the first focal length to the predefined long first focal length and to adjust the second focal length to the predefined long second focal length, thereby projecting a long field of view onto the image sensor, the long field of view having a long focal plane located at the predefined long distance and a long viewing angle,

wherein the short viewing angle is wider than the long viewing angle.

4. The optical system of any of the preceding statements, wherein the predefined short distance is between 5 cm and 50 cm.

5. The optical system of any of the preceding statements, wherein the predefined short distance is between 10 cm and 25 cm.

6. The optical system of any of the preceding statements, wherein the predefined long distance is between 0.5 m and 15 m.

7. The optical system of any of the preceding statements, wherein the predefined long distance is between 0.75 m and 2.0 m.

8. The optical system of any of the preceding statements, wherein the known size dimensions of the code include a largest dimension of between 0.1 cm and 50 cm.

9. The optical system of any of the preceding statements, wherein the known size dimensions of the code include a code width of between 0.1 cm and 50 cm and a code length of between 0.1 cm and 50 cm.

10. The optical system of any of the preceding statements, wherein the image sensor is configured to acquire a monochromatic image.

11. The optical system of any of the preceding statements, wherein the first distance is between 5 mm and 20 mm.

12. The optical system of any of the preceding statements, wherein the second distance is between 5 mm and 25 mm.

13. The optical system of any of the preceding statements, wherein the third distance is between 10 mm and 40 mm.

14. The optical system of any of the preceding statements, wherein the first variable focus lens is a first liquid lens and the second variable focus lens is a second liquid lens.

15. The optical system of the immediately preceding statement, wherein the first focal length is adjusted by receiving a first voltage from the variable focus lens controller, the first voltage corresponding to the first focal length.

16. The optical system of the two immediately preceding statements, wherein the second focal length is adjusted by receiving a second voltage from the variable focus lens controller, the second voltage corresponding to the second focal length.

17. The optical system of any of the preceding statements, wherein the variable focus lens controller is a driver circuit.

18. The optical system of any of the preceding statements, wherein the first variable focus lens having the predefined short first focal length and the second variable focus lens having the predefined short second focal length generates a wider viewing angle relative to the second variable focus lens having the predefined long first focal length and the second variable focus lens having the predefined long second focal length.

19. The optical system of any of the preceding statements, wherein the first variable focus lens having the predefined short first focal length and the second variable focus lens having the predefined short second focal length generates a shorter depth of field relative to the first variable focus lens having the predefined long first focal length and the second variable focus lens having the predefined long second focal length.

20. The optical system of any of the preceding statements, wherein the first variable focus lens having the predefined short first focal length and the second variable focus lens having the predefined short second focal length generates a lower resolution relative to the first variable focus lens having the predefined long first focal length and the second variable focus lens having the predefined long second focal length.

21. The optical system of any of the preceding statements, wherein the first variable focus lens having the predefined short first focal length and the second variable focus lens having the predefined short second focal length generates a larger aperture relative to the first variable focus lens having the predefined long first focal length and the second variable focus lens having the predefined long second focal length.

22. The optical system of any of the preceding statements, wherein the first variable focus lens having the predefined short first focal length and the second variable focus lens having the predefined short second focal length generates a projection of the code onto the image sensor that covers an area of the image sensor that is within 10% relative to the first variable focus lens having the predefined long first focal length and the second variable focus lens having the predefined long second focal length.

23. The optical system of any of the preceding statements, wherein the variable focus lens controller or the processor is configured to prevent the first focal length from being adjusted to a value that is outside a range defined by focal length values between the predefined short first focal length minus 25 mm and the predefined short first focal length plus 25 mm and between the predefined long first focal length minus 25 mm and the predefined long first focal length plus 25 mm.

24. The optical system of any of the preceding statements, wherein the variable focus lens controller or the processor is configured to prevent the first focal length from being adjusted to a value that is outside a range defined by focal length values between the predefined short first focal length minus 10 mm and the predefined short first focal length plus 10 mm and between the predefined long first focal length minus 10 mm and the predefined long first focal length plus 10 mm.

25. The optical system of any of the preceding statements, wherein the variable focus lens controller or the processor is configured to prevent the first focal length from being adjusted to a value that is outside a range defined by focal length values between the predefined short first focal length minus 5 mm and the predefined short first focal length plus 5 mm and between the predefined long first focal length minus 5 mm and the predefined long first focal length plus 5 mm.

26. The optical system of any of the preceding statements, wherein the variable focus lens controller or the processor is configured to prevent the first focal length from being adjusted to a value that is outside a range defined by focal length values between the predefined short first focal length minus 1 mm and the predefined short first focal length plus 1 mm and between the predefined long first focal length minus 1 mm and the predefined long first focal length plus 1 mm.

27. The optical system of any of the preceding statements, wherein the variable focus lens controller or the processor is configured to prevent the second focal length from being adjusted to a value that is outside a range defined by focal length values between the predefined short second focal length minus 25 mm and the predefined short second focal length plus 25 mm and between the predefined long second focal length minus 25 mm and the predefined long second focal length plus 25 mm.

28. The optical system of any of the preceding statements, wherein the variable focus lens controller or the processor is configured to prevent the second focal length from being adjusted to a value that is outside a range defined by focal length values between the predefined short second focal length minus 10 mm and the predefined short second focal length plus 10 mm and between the predefined long second focal length minus 10 mm and the predefined long second focal length plus 10 mm.

29. The optical system of any of the preceding statements, wherein the variable focus lens controller or the processor is configured to prevent the second focal length from being adjusted to a value that is outside a range defined by focal length values between the predefined short second focal length minus 5 mm and the predefined short second focal length plus 5 mm and between the predefined long second focal length minus 5 mm and the predefined long second focal length plus 5 mm.

30. The optical system of any of the preceding statements, wherein the variable focus lens controller or the processor is configured to prevent the second focal length from being adjusted to a value that is outside a range defined by focal length values between the predefined short second focal length minus 1 mm and the predefined short second focal length plus 1 mm and between the predefined long second focal length minus 1 mm and the predefined long second focal length plus 1 mm.

31. The optical system of any of the preceding statements, wherein:

a first optical power of the first variable focus lens can be adjusted between -50 diopter to +50 diopter, between -20 diopter to +20 diopter, or between -10 diopter to +10 diopter;
a second optical power of the second variable focus lens can be adjusted between -50 diopter to +50 diopter, between -20 diopter to +20 diopter, or between =10 diopter to +10 diopter;
the variable focus lens controller or the processor is configured to prevent the first optical power of the first variable focus lens from being adjusted to a value that is outside a range defined by a predefined short first optical power plus or minus 0.1 diopter, 0.2 diopter, 0.5 diopter, or 1.0 diopter and a predefined long first optical power plus or minus 0.1 diopter, 0.2 diopter, 0.5 diopter, or 1.0 diopter;

the variable focus lens controller or the processor is configured to prevent the second optical power of the second variable focus lens from being adjusted to a value that is outside a range defined by a predefined short second optical power plus or minus 0.1 diopter, 0.2 diopter, 0.5 diopter, or 1.0 diopter and a predefined long second optical power plus or minus 0.1 diopter, 0.2 diopter, 0.5 diopter, or 1.0 diopter; or
a combination thereof.

32. The optical system of any of the preceding statements, wherein the processor is configured to acquire an image using the image sensor.
33. The optical system of the immediately preceding statement, wherein the processor is configured to fine tune the first focal length and the second focal length based on one or more properties of the image.
34. The optical system of the immediately preceding statement, wherein the processor is configured to fine tune the first focal length and the second focal length by an amount of less than 25 mm.
35. The optical system of any of the two immediately preceding statements, wherein the processor is configured to fine tune the first focal length and the second focal length by an amount of less than 10 mm.
36. The optical system of any of the three immediately preceding statements, wherein the processor is configured to fine tune the first focal length and the second focal length by an amount of less than 5 mm.
37. The optical system of any of the four immediately preceding statements, wherein the processor is configured to fine tune the first focal length and the second focal length by an amount of less than 1 mm.
38. The optical system of any of the five immediately preceding statements, wherein the one or more properties are selected from the group consisting of sharpness, brightness, exposure time, gain value, and combinations thereof.
39. An optical system for reading a code at a predefined short distance, a predefined medium distance, and a predefined long distance, the code having known size dimensions, the optical system comprising:

an image sensor having an optical axis;
a fixed focus lens positioned along the optical axis at a first distance from the image sensor;
a first variable focus lens positioned along the optical axis at a second distance from the image sensor, the second distance is greater than the first distance;
a second variable focus lens positioned along the optical axis at a third distance from the image sensor, the third distance is greater than the second distance; and
a variable focus lens controller programmed to selectively control the first variable focus lens and the second variable focus lens to project a short field of view, a medium field of view, and a long field of view onto the image sensor, the short field of view having a short focal plane located at the predefined short distance and a short viewing angle, the medium field of view having a medium focal plane located at the predefined medium distance and a medium viewing angle, the long field of view having a long focal plane located at the predefined long distance and a long viewing angle, wherein the short viewing angle is wider than the medium viewing angle and the medium viewing angle is wider than the long viewing angle.

40. An optical system for reading a code at a predefined short distance, a predefined medium distance, and a predefined long distance, the code having known size dimensions, the optical system comprising:

an image sensor having an optical axis;
a fixed focus lens positioned along the optical axis at a first distance from the image sensor;
a first variable focus lens positioned along the optical axis at a second distance from the image sensor, the second distance is greater than the first distance;
a second variable focus lens positioned along the optical axis at a third distance from the image sensor, the third distance is greater than the second distance;
a variable focus lens controller configured to control a first focal length of the first variable focus lens and a second focal length of the second variable focus lens;
a processor configured to communicate signals to the variable focus lens controller; and
a memory having stored thereon a predefined short first focal length, a predefined medium first focal length, a predefined long first focal length, a predefined short second focal length, a predefined medium second focal length, a predefined long second focal length, and instructions that, when executed by the processor, cause the processor to:

receive an input specifying the short distance, the medium distance, or the long distance;
in response to receiving the input specifying the short distance:

retrieve from the memory the predefined short first focal length and the predefined short second focal length; and

send one or more short signals to the variable focus lens controller, thereby causing the variable focus lens controller to adjust the first focal length to the predefined short first focal length and to adjust the second focal length to the predefined short second focal length;

in response to receiving the input specifying the medium distance:

retrieve from the memory the predefined medium first focal length and the predefined medium second focal length; and

send one or more medium signals to the variable focus lens controller, thereby causing the variable focus lens controller to adjust the first focal length to the predefined medium first focal length and to adjust the second focal length to the predefined medium second focal length; and

in response to receiving the input specifying the long distance:

retrieve from the memory the predefined long first focal length and the predefined long second focal length; and

send one or more long signals to the variable focus lens controller specifying the predefined long first focal length and the predefined long second focal length, thereby causing the variable focus lens controller to adjust the first focal length to the predefined long first focal length and to adjust the second focal

length to the predefined long second focal length

wherein the predefined short first focal length and the predefined short second focal length are selected to project a short field of view onto the image sensor, the short field of view having a short focal plane located at the predefined short distance and a short viewing angle,

wherein the predefined medium first focal length and the predefined medium second focal length are selected to project a medium field of view onto the image sensor, the medium field of view having a medium focal plane located at the predefined medium distance and a medium viewing angle;

wherein the predefined long first focal length and the predefined long second focal length are selected to project a long field of view onto the image sensor, the long field of view having a long focal plane located at the predefined long distance and a long viewing angle, and

wherein the short viewing angle is wider than the medium viewing angle and the medium viewing angle is wider than the long viewing angle.

41. An optical system for reading a code at a predefined short distance, a predefined medium distance, and a predefined long distance, the code having known size dimensions, the optical system comprising:

an image sensor having an optical axis;

a fixed focus lens positioned along the optical axis at a first distance from the image sensor;

a first variable focus lens positioned along the optical axis at a second distance from the image sensor, the second distance is greater than the first distance;

a second variable focus lens positioned along the optical axis at a third distance from the image sensor, the third distance is greater than the second distance;

a memory having stored thereon a predefined short first focal length, a predefined medium first focal length, a predefined long first focal length, a predefined short second focal length, a predefined medium second focal length, and a predefined long second focal length;

a variable focus lens controller configured to control a first focal length of the first variable focus lens and a second focal length of the second variable focus lens; and

a processor configured to operate in a short distance mode, a medium distance mode, and a long distance mode, wherein operating in the short distance mode causes the variable focus lens controller to adjust the first focal length to the predefined short first focal length and to adjust the second focal length to the predefined short second focal length, thereby projecting a short field of view onto the image sensor, the short field of view having a short focal plane located at the predefined short distance and a short viewing angle,

wherein operating in the medium distance mode causes the variable focus lens controller to adjust the first focal length to the predefined medium first focal length and to adjust the second focal length to the predefined medium second focal length, thereby projecting a medium field of view onto the image sensor, the medium field of view having a medium focal plane located at the predefined medium distance and a medium viewing angle, and wherein operating in the long distance mode causes the variable focus lens controller to adjust the first focal length to the predefined long first focal length and to adjust the second focal length to the predefined long second focal length, thereby projecting a long field of view onto the image sensor, the long field of view having a long focal plane located at the predefined long distance and a long viewing angle,

wherein the short viewing angle is wider than the medium viewing angle and the medium viewing angle is wider than the long viewing angle.

42. The optical system of statement 39 or 41, wherein the predefined short distance is between 5 cm and 50 cm.

43. The optical system of any of statements 39 to the immediately preceding statement, wherein the predefined short distance is between 10 cm and 25 cm.

44. The optical system of any of statements 39 to the immediately preceding statement, wherein the predefined medium distance is between 0.5 m and 7.5 m.

45. The optical system of any of statements 39 to the immediately preceding statement, wherein the predefined medium distance is between 0.75 m and 2.0 m.

46. The optical system of any of statements 39 to the immediately preceding statement, wherein the predefined long distance is between 5 m and 15 m.

47. The optical system of any of statements 39 to the immediately preceding statement, wherein the predefined long distance is between 7.5 m and 12.5 m.

48. The optical system of any of statements 39 to the immediately preceding statement, wherein the known size dimensions of the code include a largest dimension of between 0.1 cm and 50 cm.

49. The optical system of any of statements 39 to the immediately preceding statement, wherein the known size dimensions of the code include a code width of between 0.1 cm and 50 cm and a code length of between 0.1 cm and 50 cm.

50. The optical system of any of statements 39 to the immediately preceding statement, wherein the image sensor is configured to acquire a monochromatic image.

51. The optical system of any of statements 39 to the immediately preceding statement, wherein the first distance is between 5 mm and 20 mm.

52. The optical system of any of statements 39 to the immediately preceding statement, wherein the second distance is between 5 mm and 25 mm.

53. The optical system of any of statements 39 to the immediately preceding statement, wherein the third distance is between 10 mm and 40 mm.

54. The optical system of any of statements 39 to the immediately preceding statement, wherein the first variable focus lens is a first liquid lens and the second variable focus lens is a second liquid lens.

55. The optical system of the immediately preceding statement, wherein the first focal length is adjusted by receiving a first voltage from the variable focus lens controller, the first voltage corresponding to the first focal length.

56. The optical system of the two immediately preceding statements, wherein the second liquid lens is configured to control the second focal length by receiving a second voltage corresponding to the second focal length.

57. The optical system of any of statements 39 to the immediately preceding statement, wherein the variable focus lens controller is a driver circuit.

58. The optical system of any of statements 39 to the immediately preceding statement, wherein the first variable focus lens having the predefined short first focal length and the second variable focus lens having the predefined short second focal length generates a wider viewing angle relative to the second variable focus lens having the predefined long first focal length and the second variable focus lens having the predefined long second focal length.

59. The optical system of any of statements 39 to the immediately preceding statement, wherein the first variable focus lens having the predefined short first focal length and the second variable focus lens having the predefined short second focal length generates a shorter depth of field relative to the second variable focus lens having the predefined long first focal length and the second variable focus lens having the predefined long second focal length.

60. The optical system of any of statements 39 to the immediately preceding statement, wherein the first variable focus lens having the predefined short first focal length and the second variable focus lens having the predefined short second focal length generates a lower resolution relative to the second variable focus lens having the predefined long first focal length and the second variable focus lens having the predefined long second focal length.

61. The optical system of any of statements 39 to the immediately preceding statement, wherein the first variable focus lens having the predefined short first focal length and the second variable focus lens having the predefined short second focal length generates a larger aperture relative to the second variable focus lens having the predefined long first focal length and the second variable focus lens having the predefined long second focal length.

62. The optical system of any of statements 39 to the immediately preceding statement, wherein the first variable focus lens having the predefined short first focal length and the second variable focus lens having the predefined short second focal length generates a projection of the code onto the image sensor that covers an area of the image sensor that is within 10% relative to the second variable focus lens having the predefined long first focal length and the second variable focus lens having the predefined long second focal length.

63. The optical system of any of statements 39 to the immediately preceding statement, wherein the first variable focus lens having the predefined medium first focal length and the second variable focus lens having the predefined medium second focal length generates a wider viewing angle relative to the second variable focus lens having the predefined long first focal length and the second variable focus lens having the predefined long second focal length.

64. The optical system of any of statements 39 to the immediately preceding statement, wherein the first variable focus lens having the predefined medium first focal length and the second variable focus lens having the predefined medium second focal length generates a shorter depth of field relative to the second variable focus lens having the predefined long first focal length and the second variable focus lens having the predefined long second focal length.

65. The optical system of any of statements 39 to the immediately preceding statement, wherein the first variable focus lens having the predefined medium first focal length and the second variable focus lens having the predefined medium second focal length generates a lower resolution relative to the second variable focus lens having the predefined long first focal length and the second variable focus lens having the predefined long second focal length.

66. The optical system of any of statements 39 to the immediately preceding statement, wherein the first variable focus lens having the predefined medium first focal length and the second variable focus lens having the predefined medium second focal length generates a larger aperture relative to the second variable focus lens having the predefined long first focal length and the second variable focus lens having the predefined long second focal length.

67. The optical system of any of statements 39 to the immediately preceding statement, wherein the first variable focus lens having the predefined medium first focal length and the second variable focus lens having the predefined medium second focal length generates a projection of the code onto the image sensor that covers an area of the image sensor that is within 10% relative to the second variable focus lens having the predefined long first focal length and the second variable focus lens having the predefined long second focal length.

68. The optical system of any of statements 39 to the immediately preceding statement, wherein the first variable focus lens having the predefined short first focal length and the second variable focus lens having the predefined short second focal length generates a wider viewing angle relative to the second variable focus lens having the predefined medium first focal length and the second variable focus lens having the predefined medium second focal length.

69. The optical system of any of statements 39 to the immediately preceding statement, wherein the first variable focus lens having the predefined short first focal length and the second variable focus lens having the predefined short second focal length generates a shorter depth of field relative to the second variable focus lens having the predefined medium first focal length and the second variable focus lens having the predefined medium second focal length.

70. The optical system of any of statements 39 to the immediately preceding statement, wherein the first variable focus lens having the predefined short first focal length and the second variable focus lens having the predefined short second focal length generates a lower resolution relative to the second variable focus lens having the predefined medium first focal length and the second variable focus lens having the predefined medium second focal length.

71. The optical system of any of statements 39 to the immediately preceding statement, wherein the first variable focus lens having the predefined short first focal length and the second variable focus lens having the predefined short second focal length generates a larger aperture relative to the second variable focus lens having the predefined medium first focal length and the second variable focus lens having the predefined medium second focal length.

72. The optical system of any of statements 39 to the immediately preceding statement, wherein the first variable focus lens having the predefined short first focal length and the second variable focus lens having the predefined short second focal length generates a projection of the code onto the image sensor that covers an area of the image sensor that is within 10% relative to the second variable focus lens having the predefined medium first focal length and the second variable focus lens having the predefined medium second focal length.

73. The optical system of any of statements 39 to the immediately preceding statement, wherein the variable focus lens controller or the processor is configured to prevent the first focal length from being adjusted to a value that is outside a range defined by focal length values between the predefined short first focal length minus 25 mm and the predefined short first focal length plus 25 mm, between the predefined medium first focal length minus 25 mm and the predefined medium first focal length plus 25 mm, and between the predefined long first focal length minus 25 mm and the predefined long first focal length plus 25 mm.

74. The optical system of any of statements 39 to the immediately preceding statement, wherein the variable focus lens controller or the processor is configured to prevent the first focal length from being adjusted to a value that is outside a range defined by focal length values between the predefined short first focal length minus 10 mm and the predefined short first focal length plus 10 mm, between the predefined medium first focal length minus 10 mm and the predefined medium first focal length plus 10 mm, and between the predefined long first focal length minus 10 mm and the predefined long first focal length plus 10 mm.

75. The optical system of any of statements 39 to the immediately preceding statement, wherein the variable focus lens controller or the processor is configured to prevent the first focal length from being adjusted to a value that is outside a range defined by focal length values between the predefined short first focal length minus 5 mm and the predefined short first focal length plus 5 mm, between the predefined medium first focal length minus 5 mm and the predefined medium first focal length plus 5 mm, and between the predefined long first focal length minus 5 mm and the predefined long first focal length plus 5 mm.

76. The optical system of any of statements 39 to the immediately preceding statement, wherein the variable focus lens controller or the processor is configured to prevent the first focal length from being adjusted to a value that is outside a range defined by focal length values between the predefined short first focal length minus 1 mm and the predefined short first focal length plus 1 mm, between the predefined medium first focal length minus 1 mm and the predefined medium first focal length plus 1 mm, and between the predefined long first focal length minus 1 mm and the predefined long first focal length plus 1 mm.

77. The optical system of any of statements 39 to the immediately preceding statement, wherein the variable focus lens controller or the processor is configured to prevent the second focal length from being adjusted to a value that is outside a range defined by focal length values between the predefined short second focal length minus 25 mm and the predefined short second focal length plus 25 mm, between the predefined medium second focal length minus 25 mm and the predefined medium second focal length plus 25 mm, and between the predefined long second focal length minus 25 mm and the predefined long second focal length plus 25 mm.

78. The optical system of any of statements 39 to the immediately preceding statement, wherein the variable focus lens controller or the processor is configured to prevent the second focal length from being adjusted to a value that is outside a range defined by focal length values between the predefined short second focal length minus 10 mm and the predefined short second focal length plus 10 mm, between the predefined medium second focal length minus 10 mm and the predefined medium second focal length plus 10 mm, and between the predefined long second focal length minus 10 mm and the predefined long second focal length plus 10 mm.

79. The optical system of any of statements 39 to the immediately preceding statement, wherein the variable focus lens controller or the processor is configured to prevent the second focal length from being adjusted to a value that is outside a range defined by focal length values between the predefined short second focal length minus 5 mm and the predefined short second focal length plus 5 mm, between the predefined medium second focal length minus 5 mm and the predefined medium second focal length plus 5 mm, and between the predefined long second focal length minus 5 mm and the predefined long second focal length plus 5 mm.

80. The optical system of any of statements 39 to the immediately preceding statement, wherein the variable focus lens controller or the processor is configured to prevent the second focal length from being adjusted to a value that is outside a range defined by focal length values between the predefined short second focal length minus 1 mm and the predefined short second focal length plus 1 mm, between the predefined medium second focal length minus 1 mm and the predefined medium second focal length plus 1 mm, and between the predefined long second focal length minus 1 mm and the predefined long second focal length plus 1 mm.

81. The optical system of any of statements 39 to the immediately preceding statement, wherein:

a first optical power of the first variable focus lens can be adjusted between -50 diopter to +50 diopter, between -20 diopter to +20 diopter, or between -10 diopter to +10 diopter;
a second optical power of the second variable focus lens can be adjusted between -50 diopter to +50 diopter, between -20 diopter to +20 diopter, or between =10 diopter to +10 diopter;
the variable focus lens controller or the processor is configured to prevent the first optical power of the first variable focus lens from being adjusted to a value that is outside a range defined by a predefined short first optical power plus or minus 0.1 diopter, 0.2 diopter, 0.5 diopter, or 1.0 diopter, a predefined medium first optical power plus or minus 0.1 diopter, 0.2 diopter, 0.5 diopter, or 1.0 diopter, and a predefined long first optical power plus or minus 0.1 diopter, 0.2 diopter, 0.5 diopter, or 1.0 diopter;
the variable focus lens controller or the processor is configured to prevent the second optical power of the second variable focus lens from being adjusted to a value that is outside a range defined by a predefined short second optical power plus or minus 0.1 diopter, 0.2 diopter, 0.5 diopter, or 1.0 diopter, a predefined medium first optical power plus or minus 0.1 diopter, 0.2 diopter, 0.5 diopter, or 1.0 diopter, and a predefined long second optical power plus or minus 0.1 diopter, 0.2 diopter, 0.5 diopter, or 1.0 diopter; or
a combination thereof.

82. The optical system of any of statements 39 to the immediately preceding statement, wherein the processor is configured to acquire an image using the image sensor.

83. The optical system of the immediately preceding statement, wherein the processor is configured to fine tune the first focal length and the second focal length based on one or more properties of the image.

84. The optical system of the immediately preceding statement, wherein the processor is configured to fine tune the first focal length and the second focal length by an amount of less than 25 mm.

85. The optical system of any of the two immediately preceding statements, wherein the processor is configured to fine tune the first focal length and the second focal length by an amount of less than 10 mm.

86. The optical system of any of the three immediately preceding statements, wherein the processor is configured to fine tune the first focal length and the second focal length by an amount of less than 5 mm.

87. The optical system of any of the four immediately preceding statements, wherein the processor is configured to fine tune the first focal length and the second focal length by an amount of less than 1 mm.

88. The optical system of any of the five immediately preceding statements, wherein the one or more properties are selected from the group consisting of sharpness, brightness, illumination, distance measurement, and combinations thereof.

89. A code reader comprising the optical system of any of the preceding statements.

90. The code reader of the immediately preceding statement, wherein the code reader is hand held.

91. The code reader of statement 89, wherein the code reader is a fix-mount code reader.

92. A method of making an optical system for reading a code at a predefined short distance and a predefined long distance, the method comprising:

a) positioning an image sensor having an optical axis, a fixed focus lens, a first variable focus lens, and a second variable focus lens such that the fixed focus lens is on the optical axis at a first distance from the image sensor, the first variable focus lens is on the optical axis at a second distance from the image sensor, and the second variable focus lens is on the optical axis at a third distance from the image sensor, the second distance is greater than the first distance, the third distance is greater than the second distance, the first variable focus lens and the second variable focus lens in electronic communication with a variable focus lens controller, the variable focus lens controller in electronic communication with a processor, the processor in electronic communication with a memory;

b) determining a short first focal length and a short second focal length to provide desired short optical properties for acquiring a first image of the code at the predefined short distance and a long first focal length and a long second focal length to provide desired long optical properties for acquiring a second image of the code at the predefined long distance; and

c) storing on the memory a digital representation of the short first focal length, the long first focal length, the short second focal length, and the long second focal length.

93. The method of the immediately preceding statement, wherein the determining of step b) includes solving one or more equations.

94. The method of the immediately preceding statement, wherein the one or more equations include:

$$f_2' = \frac{a_2'\left(\dfrac{f_1' a_1}{f_1' + a_1} - e\right)}{\dfrac{f_1' a_1}{f_1' + a_1} - e - a_2'} \qquad \text{and} \qquad f_2' = \frac{f_T'\left(f_1' - e\right)}{f_1' - f_T'} \, ,$$

where $f_1'$ is a first focal length of the first variable focus lens, $f_2'$ is a second focal length of the second variable focus lens, $f_T'$ is a total focal length of the optical system, e is the third distance minus the second distance, $a_1$ is an object distance from the second variable focus lens to the code, and $a_2'$ is a back focal length of the optical system.

95. The method of either of the two immediately preceding statements, wherein the solving one or more equations includes solving for the predefined short distance and the predefined long distance.

96. The method of any of statements 92 to the immediately preceding statement, wherein the desired short optical properties include a wider viewing angle relative to the desired long optical properties.

97. The method of any of statements 92 to the immediately preceding statement, wherein the desired short optical properties include a shorter depth of field relative to the desired long optical properties.

98. A method of making an optical system for reading a code at a predefined short distance, a predefined medium distance, and a predefined long distance, the method comprising:

a) positioning an image sensor having an optical axis, a fixed focus lens, a first variable focus lens, and a second variable focus lens such that the fixed focus lens is on the optical axis at a first distance from the image sensor, the first variable focus lens is on the optical axis at a second distance from the image sensor, and the second variable focus lens is on the optical axis at a third distance from the image sensor, the second distance is greater than the first distance, the third distance is greater than the second distance, the first variable focus lens and the second variable focus lens in electronic communication with a variable focus lens controller, the variable focus lens controller in electronic communication with a processor, the processor in electronic communication with a memory;

b) determining a short first focal length and a short second focal length to provide desired short optical properties for acquiring a first image of the code at the predefined short distance, a medium first focal length and a medium second focal length to provide desired medium optical properties for acquiring a second image of the code at the predefined medium distance, and a long first focal length and a long second focal length to provide desired long optical properties for acquiring a third image of the code at the predefined long distance; and

c) storing on the memory a digital representation of the short first focal length, the medium first focal length, the long first focal length, the short second focal length, the medium second focal length, and the long second focal length.

99. The method of the immediately preceding statement, wherein the determining of step b) includes solving one or more equations.

100. The method of the immediately preceding statement, wherein the one or more equations include:

$$f_2' = \frac{a_2'\left(\frac{f_1' a_1}{f_1' + a_1} - e\right)}{\frac{f_1' a_1}{f_1' + a_1} - e - a_2'} \qquad f_2' = \frac{f_T'\left(f_1' - e\right)}{f_1' - f_T'}$$

and ,

where $f'_1$ is a first focal length of the first variable focus lens, $f'_2$ is a second focal length of the second variable focus lens, $f'_T$ is a total focal length of the optical system, e is the third distance minus the second distance, $a_1$ is an object distance from the second variable focus lens to the code, and $a'_2$ is a back focal length of the optical system.

101. The method of either of the two immediately preceding statements, wherein the solving one or more equations includes solving for the predefined short distance, the predefined medium distance, and the predefined long distance.

102. The method of any of statements 98 to the immediately preceding statement, wherein the desired short optical properties include a wider viewing angle relative to the desired medium optical properties.

103. The method of any of statements 98 to the immediately preceding statement, wherein the desired short optical properties include a shorter depth of field relative to the desired medium optical properties.

104. The method of any of statements 98 to the immediately preceding statement, wherein the desired medium optical properties include a wider viewing angle relative to the desired long optical properties.

105. The method of any of statements 98 to the immediately preceding statement, wherein the desired medium optical properties include a shorter depth of field relative to the desired long optical properties.

106. A method of using the optical system of any of statements 1 to 38 for reading the code at the predefined short distance or the predefined long distance, the method comprising:

a) receiving an input specifying the predefined short distance or the predefined long distance;
b) in response to receiving the input specifying the short distance:

b1) retrieving the predefined short first focal length and the predefined short second focal length; and
b2) setting the first focal length of the first variable focus lens to the predefined short first focal length and the second focal length of the second variable focus lens to the predefined short second focal length;

c) in response to receiving the input specifying the predefined long distance:

c1) retrieving the predefined long first focal length and the predefined long second focal length; and
c2) setting the first focal length of the first variable focus lens to the predefined long first focal length and the second focal length of the second variable focus lens to the predefined long second focal length; and

d) acquiring an image of the code.

107. The method of the immediately preceding statement, the method further comprising attempting to decode the code from the image acquired in step d).

108. The method of either of the two immediately preceding statements, the method further comprising:

e) analyzing the image to determine if the image is of sufficient quality for decoding the code;
f) fine tuning the first focal length and/or the second focal length based on the analysis of step e);
g) subsequent to step f), acquiring a fine-tuned image of the code.

109. The method of the immediately preceding statement, the method further comprising attempting to decode the code from the fine-tuned image acquired in step g).

110. A method of using the optical system of any of statements 39 to 88 for reading the code at the predefined short distance, the predefined medium distance, or the predefined long distance, the method comprising:

a) receiving an input specifying the predefined short distance, the predefined medium distance, or the predefined long distance;
b) in response to receiving the input specifying the short distance:

b1) retrieving the predefined short first focal length and the predefined short second focal length; and
b2) setting the first focal length of the first variable focus lens to the predefined short first focal length and the second focal length of the second variable focus lens to the predefined short second focal length;

c) in response to receiving the input specifying the medium distance:

c1) retrieving the predefined medium first focal length and the predefined medium second focal length; and
c2) setting the first focal length of the first variable focus lens to the predefined medium first focal length and the second focal length of the second variable focus lens to the predefined medium second focal length;

d) in response to receiving the input specifying the predefined long distance:

d1) retrieving the predefined long first focal length and the predefined long second focal length; and
d2) setting the first focal length of the first variable focus lens to the predefined long first focal length and the second focal length of the second variable focus lens to the predefined long second focal length; and

e) acquiring an image of the code.

111. The method of the immediately preceding statement, the method further comprising attempting to decode the code from the image acquired in step e).

112. The method of either of the two immediately preceding statements, the method further comprising:

f) analyzing the image to determine if the image is of sufficient quality for decoding the code;
g) fine tuning the first focal length and/or the second focal length based on the analysis of step e);
h) subsequent to step g), acquiring a fine-tuned image of the code.

113. The method of the immediately preceding statement, the method further comprising attempting to decode the code from the fine-tuned image acquired in step h).

The particular aspects disclosed above are illustrative only, as the technology may be modified and practiced in different but equivalent manners apparent to those skilled in the art having the benefit of the teachings herein. Furthermore, no limitations are intended to the details of construction or design herein shown, other than as described in the claims below. It is therefore evident that the particular aspects disclosed above may be altered or modified and all such variations are considered within the scope and spirit of the technology. Accordingly, the protection sought herein is as set forth in the claims below.

**Claims**

1. An optical system for reading a code at a predefined short distance and a predefined long distance, the code having known size dimensions, the optical system comprising:

   an image sensor having an optical axis;
   a fixed focus lens positioned along the optical axis at a first distance from the image sensor;
   a first variable focus lens positioned along the optical axis at a second distance from the image sensor, the second distance is greater than the first distance;
   a second variable focus lens positioned along the optical axis at a third distance from the image sensor, the third distance is greater than the second distance; and
   a variable focus lens controller programmed to selectively control the first variable focus lens and the second variable focus lens to project a short field of view and a long field of view onto the image sensor, the short field of view having a short focal plane located at the predefined short distance and a short viewing angle, the long field of view having a long focal plane located at the predefined long distance and a long viewing angle, wherein the short viewing angle is wider than the long viewing angle.

2. An optical system for reading a code at a predefined short distance and a predefined long distance, the code having known size dimensions, the optical system comprising:

   an image sensor having an optical axis;
   a fixed focus lens positioned along the optical axis at a first distance from the image sensor;
   a first variable focus lens positioned along the optical axis at a second distance from the image sensor, the second distance is greater than the first distance;
   a second variable focus lens positioned along the optical axis at a third distance from the image sensor, the third distance is greater than the second distance;
   a variable focus lens controller configured to control a first focal length of the first variable focus lens and a second focal length of the second variable focus lens;
   a processor configured to communicate signals to the variable focus lens controller; and
   a memory having stored thereon a predefined short first focal length, a predefined long first focal length, a predefined short second focal length, a predefined long second focal length, and instructions that, when executed by the processor, cause the processor to:

      receive an input specifying the predefined short distance or the predefined long distance;
      in response to receiving the input specifying the predefined short distance:

         retrieve from the memory the predefined short first focal length and the predefined short second focal length; and
         send one or more short signals to the variable focus lens controller specifying the predefined short first focal length and the predefined short second focal length, thereby causing the variable focus lens controller to set a first focal length of the first variable focus lens to the predefined short first focal length and to set a second focal length of the second variable focus lens to the predefined short second focal length; and
      in response to receiving the input specifying the long distance:

         retrieve from the memory the predefined long first focal length and the predefined long second focal length; and
         send one or more long signals to the variable focus lens controller specifying the predefined long first focal length and the predefined long second focal length thereby causing the variable focus lens controller to set the first focal length of the first variable focus lens to the predefined long first focal length and to set the second focal length of the second variable focus lens to the predefined long second focal length,
         wherein the predefined short first focal length and the predefined short second focal length are selected to project a short field of view onto the image sensor, the short field of view having a short focal plane located at the predefined short distance and a short viewing angle,
         wherein the predefined long first focal length and the predefined long second focal length are selected to project a long field of view onto the image sensor, the long field of view having a long focal plane located at the predefined long distance and a long viewing angle, and

wherein the short viewing angle is wider than the long viewing angle.

3. An optical system for reading a code at a predefined short distance and a predefined long distance, the code having known size dimensions, the optical system comprising:

an image sensor having an optical axis;
a fixed focus lens positioned along the optical axis at a first distance from the image sensor;
a first variable focus lens positioned along the optical axis at a second distance from the image sensor, the second distance is greater than the first distance;
a second variable focus lens positioned along the optical axis at a third distance from the image sensor, the third distance is greater than the second distance;
a memory having stored thereon a predefined short first focal length, a predefined long first focal length, a predefined short second focal length, and a predefined long second focal length;
a variable focus lens controller configured to control a first focal length of the first variable focus lens and a second focal length of the second variable focus lens; and
a processor configured to operate in a short distance mode and a long distance mode,
wherein operating in the short distance mode causes the variable focus lens controller to adjust the first focal length to the predefined short first focal length and to adjust the second focal length to the predefined short second focal length, thereby projecting a short field of view onto the image sensor, the short field of view having a short focal plane located at the predefined short distance and a short viewing angle, and
wherein operating in the long distance mode causes the variable focus lens controller to adjust the first focal length to the predefined long first focal length and to adjust the second focal length to the predefined long second focal length, thereby projecting a long field of view onto the image sensor, the long field of view having a long focal plane located at the predefined long distance and a long viewing angle,
wherein the short viewing angle is wider than the long viewing angle.

4. The optical system of any of the preceding claims, wherein the predefined short distance is between 5 cm and 50 cm.

5. The optical system of any of the preceding claims, wherein the predefined long distance is between 0.5 m and 15 m.

6. The optical system of any of the preceding claims, wherein the first variable focus lens is a first liquid lens and the second variable focus lens is a second liquid lens.

7. The optical system of any of the preceding claims, wherein:

a first optical power of the first variable focus lens can be adjusted between -50 diopter to +50 diopter, between -20 diopter to +20 diopter, or between -10 diopter to +10 diopter;
a second optical power of the second variable focus lens can be adjusted between -50 diopter to +50 diopter, between -20 diopter to +20 diopter, or between =10 diopter to +10 diopter;
the variable focus lens controller or the processor is configured to prevent the first optical power of the first variable focus lens from being adjusted to a value that is outside a range defined by a predefined short first optical power plus or minus 0.1 diopter, 0.2 diopter, 0.5 diopter, or 1.0 diopter and a predefined long first optical power plus or minus 0.1 diopter, 0.2 diopter, 0.5 diopter, or 1.0 diopter;
the variable focus lens controller or the processor is configured to prevent the second optical power of the second variable focus lens from being adjusted to a value that is outside a range defined by a predefined short second optical power plus or minus 0.1 diopter, 0.2 diopter, 0.5 diopter, or 1.0 diopter and a predefined long second optical power plus or minus 0.1 diopter, 0.2 diopter, 0.5 diopter, or 1.0 diopter; or
a combination thereof.

8. The optical system of any of the preceding claims, wherein the processor is configured to fine tune the first focal length and the second focal length based on one or more properties of an acquired image.

9. An optical system for reading a code at a predefined short distance, a predefined medium distance, and a predefined long distance, the code having known size dimensions, the optical system comprising:

an image sensor having an optical axis;
a fixed focus lens positioned along the optical axis at a first distance from the image sensor;
a first variable focus lens positioned along the optical axis at a second distance from the image sensor, the second distance is greater than the first distance;

a second variable focus lens positioned along the optical axis at a third distance from the image sensor, the third distance is greater than the second distance; and

a variable focus lens controller programmed to selectively control the first variable focus lens and the second variable focus lens to project a short field of view, a medium field of view, and a long field of view onto the image sensor, the short field of view having a short focal plane located at the predefined short distance and a short viewing angle, the medium field of view having a medium focal plane located at the predefined medium distance and a medium viewing angle, the long field of view having a long focal plane located at the predefined long distance and a long viewing angle, wherein

the short viewing angle is wider than the medium viewing angle and the medium viewing angle is wider than the long viewing angle.

**10.** An optical system for reading a code at a predefined short distance, a predefined medium distance, and a predefined long distance, the code having known size dimensions, the optical system comprising:

an image sensor having an optical axis;

a fixed focus lens positioned along the optical axis at a first distance from the image sensor;

a first variable focus lens positioned along the optical axis at a second distance from the image sensor, the second distance is greater than the first distance;

a second variable focus lens positioned along the optical axis at a third distance from the image sensor, the third distance is greater than the second distance;

a variable focus lens controller configured to control a first focal length of the first variable focus lens and a second focal length of the second variable focus lens;

a processor configured to communicate signals to the variable focus lens controller; and

a memory having stored thereon a predefined short first focal length, a predefined medium first focal length, a predefined long first focal length, a predefined short second focal length, a predefined medium second focal length, a predefined long second focal length, and instructions that, when executed by the processor, cause the processor to:

receive an input specifying the short distance, the medium distance, or the long distance;

in response to receiving the input specifying the short distance:

retrieve from the memory the predefined short first focal length and the predefined short second focal length; and

send one or more short signals to the variable focus lens controller, thereby causing the variable focus lens controller to adjust the first focal length to the predefined short first focal length and to adjust the second focal length to the predefined short second focal length;

in response to receiving the input specifying the medium distance:

retrieve from the memory the predefined medium first focal length and the predefined medium second focal length; and

send one or more medium signals to the variable focus lens controller, thereby causing the variable focus lens controller to adjust the first focal length to the predefined medium first focal length and to adjust the second focal length to the predefined medium second focal length; and

in response to receiving the input specifying the long distance:

retrieve from the memory the predefined long first focal length and the predefined long second focal length; and

send one or more long signals to the variable focus lens controller specifying the predefined long first focal length and the predefined long second focal length, thereby causing the variable focus lens controller to adjust the first focal length to the predefined long first focal length and to adjust the second focal length to the predefined long second focal length

wherein the predefined short first focal length and the predefined short second focal length are selected to project a short field of view onto the image sensor, the short field of view having a short focal plane located at the predefined short distance and a short viewing angle,

wherein the predefined medium first focal length and the predefined medium second focal length are selected to project a medium field of view onto the image sensor, the medium field of view having a medium focal plane located at the predefined medium distance and a medium viewing angle;
wherein the predefined long first focal length and the predefined long second focal length are selected to project a long field of view onto the image sensor, the long field of view having a long focal plane located at the predefined long distance and a long viewing angle, and wherein the short viewing angle is wider than the medium viewing angle and the medium viewing angle is wider than the long viewing angle.

11. The optical system of any of claims 9 to the immediately preceding claim, wherein the first variable focus lens having the predefined medium first focal length and the second variable focus lens having the predefined medium second focal length generates a larger aperture relative to the second variable focus lens having the predefined long first focal length and the second variable focus lens having the predefined long second focal length.

12. The optical system of any of claims 9 to the immediately preceding claim, wherein:

a first optical power of the first variable focus lens can be adjusted between -50 diopter to +50 diopter, between -20 diopter to +20 diopter, or between -10 diopter to +10 diopter;
a second optical power of the second variable focus lens can be adjusted between -50 diopter to +50 diopter, between -20 diopter to +20 diopter, or between =10 diopter to +10 diopter;
the variable focus lens controller or the processor is configured to prevent the first optical power of the first variable focus lens from being adjusted to a value that is outside a range defined by a predefined short first optical power plus or minus 0.1 diopter, 0.2 diopter, 0.5 diopter, or 1.0 diopter, a predefined medium first optical power plus or minus 0.1 diopter, 0.2 diopter, 0.5 diopter, or 1.0 diopter, and a predefined long first optical power plus or minus 0.1 diopter, 0.2 diopter, 0.5 diopter, or 1.0 diopter;
the variable focus lens controller or the processor is configured to prevent the second optical power of the second variable focus lens from being adjusted to a value that is outside a range defined by a predefined short second optical power plus or minus 0.1 diopter, 0.2 diopter, 0.5 diopter, or 1.0 diopter, a predefined medium first optical power plus or minus 0.1 diopter, 0.2 diopter, 0.5 diopter, or 1.0 diopter, and a predefined long second optical power plus or minus 0.1 diopter, 0.2 diopter, 0.5 diopter, or 1.0 diopter;
or
a combination thereof.

13. A method of making an optical system for reading a code at a predefined short distance and a predefined long distance, the method comprising:

a) positioning an image sensor having an optical axis, a fixed focus lens, a first variable focus lens, and a second variable focus lens such that the fixed focus lens is on the optical axis at a first distance from the image sensor, the first variable focus lens is on the optical axis at a second distance from the image sensor, and the second variable focus lens is on the optical axis at a third distance from the image sensor, the second distance is greater than the first distance, the third distance is greater than the second distance, the first variable focus lens and the second variable focus lens in electronic communication with a variable focus lens controller, the variable focus lens controller in electronic communication with a processor, the processor in electronic communication with a memory;
b) determining a short first focal length and a short second focal length to provide desired short optical properties for acquiring a first image of the code at the predefined short distance and a long first focal length and a long second focal length to provide desired long optical properties for acquiring a second image of the code at the predefined long distance; and
c) storing on the memory a digital representation of the short first focal length, the long first focal length, the short second focal length, and the long second focal length.

14. The method of the immediately preceding claim, wherein the determining of step b) includes solving one or more equations.

15. The method of the immediately preceding claim, wherein the one or more equations include:

$$f_2' = \frac{a_2'\left(\frac{f_1' a_1}{f_1' + a_1} - e\right)}{\frac{f_1' a_1}{f_1' + a_1} - e - a_2'} \qquad f_2' = \frac{f_T'(f_1' - e)}{f_1' - f_T'}$$

and ,

where $f'_1$ is a first focal length of the first variable focus lens, $f'_2$ is a second focal length of the second variable focus lens, $f'_T$ is a total focal length of the optical system, e is the third distance minus the second distance, $a_1$ is an object distance from the second variable focus lens to the code, and $a'_2$ is a back focal length of the optical system.

16. The method of either of the two immediately preceding claims, wherein the solving one or more equations includes solving for the predefined short distance and the predefined long distance.

17. A method of making an optical system for reading a code at a predefined short distance, a predefined medium distance, and a predefined long distance, the method comprising:

a) positioning an image sensor having an optical axis, a fixed focus lens, a first variable focus lens, and a second variable focus lens such that the fixed focus lens is on the optical axis at a first distance from the image sensor, the first variable focus lens is on the optical axis at a second distance from the image sensor, and the second variable focus lens is on optical axis at a third distance from the image sensor, the second distance is greater than the first distance, the third distance is greater than the second distance, the first variable focus lens and the second variable focus lens in electronic communication with a variable focus lens controller, the variable focus lens controller in electronic communication with a processor, the processor in electronic communication with a memory;
b) determining a short first focal length and a short second focal length to provide desired short optical properties for acquiring a first image of the code at the predefined short distance, a medium first focal length and a medium second focal length to provide desired medium optical properties for acquiring a second image of the code at the predefined medium distance, and a long first focal length and a long second focal length to provide desired long optical properties for acquiring a third image of the code at the predefined long distance; and
c) storing on the memory a digital representation of the short first focal length, the medium first focal length, the long first focal length, the short second focal length, the medium second focal length, and the long second focal length.

18. The method of the immediately preceding claim, wherein the determining of step b) includes solving one or more equations.

19. The method of the immediately preceding claim, wherein the one or more equations include:

$$f_2' = \frac{a_2'\left(\frac{f_1' a_1}{f_1' + a_1} - e\right)}{\frac{f_1' a_1}{f_1' + a_1} - e - a_2'} \qquad f_2' = \frac{f_T'(f_1' - e)}{f_1' - f_T'}$$

and ,

where $f'_1$ is a first focal length of the first variable focus lens, $f'_2$ is a second focal length of the second variable focus lens, $f'_T$ is a total focal length of the optical system, e is the third distance minus the second distance, $a_1$ is an object distance from the second variable focus lens to the code, and $a'_2$ is a back focal length of the optical system.

20. The method of either of the two immediately preceding claims, wherein the solving one or more equations includes solving for the predefined short distance, the predefined medium distance, and the predefined long distance.

Fig. 1

Fig. 2

EP 3 525 028 A2

Fig. 3

Fig. 4

START

300

RECEIVE
INPUT
302

SHORT?

MEDIUM?

LONG?

RETRIEVE PREDEFINED
SHORT FIRST FOCAL
LENGTH AND PREDEFINED
SHORT SECOND FOCAL
LENGTH
304

RETRIEVE PREDEFINED
MEDIUM FIRST FOCAL
LENGTH AND PREDEFINED
MEDIUM SECOND FOCAL
LENGTH
308

RETRIEVE PREDEFINED
LONG FIRST FOCAL LENGTH
AND PREDEFINED LONG
SECOND FOCAL LENGTH
312

SET PREDEFINED SHORT
FIRST FOCAL LENGTH AND
PREDEFINED SHORT
SECOND FOCAL LENGTH
306

SET PREDEFINED MEDIUM
FIRST FOCAL LENGTH AND
PREDEFINED MEDIUM
SECOND FOCAL LENGTH
310

SET PREDEFINED LONG
FIRST FOCAL LENGTH AND
PREDEFINED LONG SECOND
FOCAL LENGTH
314

ACQUIRE
IMAGE
316

ANALYZE
IMAGE
318

FINE TUNE
FOCAL
LENGTHS
320

ACQUIRE FINE-
TUNED IMAGE
322

DECODE CODE
324

END

Fig. 5

```
        ┌──────────────┐
        │    START     │
        └──────┬───────┘
               │
               ▼                      400
      ┌─────────────────┐  ┌ ─ ─ ─ ─ ─ ─ ─ ┐
      │  MOUNT IMAGE    │      DETERMINE
      │    SENSOR       │ ─ ─▶   DISTANCES
      │     402         │        403
      └────────┬────────┘  └ ─ ─ ─ ─ ─ ─ ─ ┘
               │
               ▼
      ┌─────────────────┐
      │ POSITION FIXED  │
      │   FOCUS LENS    │
      │     404         │
      └────────┬────────┘
               │
               ▼
    ┌───────────────────┐
    │   POSITION FIRST  │
    │ VARIABLE FOCUS LENS│
    │       406         │
    └─────────┬─────────┘
              │
              ▼
    ┌───────────────────┐  ┌ ─ ─ ─ ─ ─ ─ ─ ─ ─ ─ ─ ┐
    │  POSITION SECOND  │   DETERMINE PREDETERMINED
    │VARIABLE FOCUS LENS │─ ▶    FOCAL LENGTHS
    │       408         │           409
    └─────────┬─────────┘  └ ─ ─ ─ ─ ─ ─ ─ ─ ─ ─ ─ ┘
              │
              ▼
  ┌───────────────────────┐
  │  PROGRAM MEMORY WITH   │
  │PREDETERMINED FOCAL LENGTHS│
  │         410           │
  └──────────┬────────────┘
             │
             ▼
        ┌──────────┐
        │   END    │
        └──────────┘
```

Fig. 6

# FOCAL LENGTH OF THE ENTIRE SYSTEM

Fig. 7